# EUROPÄISCHE PATENTSCHRIFT

(11) **EP 4 208 939 B1**
(45) Veröffentlichungstag und Bekanntmachung des Hinweises auf die Patenterteilung: **22.11.2023**
(21) Anmeldenummer: 21790881.3
(22) Anmeldetag: 13.10.2021
(51) Int. Cl.: H02K 41/03, H02K 33/16, B01F 31/20, B01F 31/22, B01F 35/213

(54) **VERFAHREN ZUM STEUERN EINES PLANARANTRIEBSSYSTEMS UND PLANARANTRIEBSSYSTEM**
METHOD FOR CONTROLLING A PLANAR DRIVE SYSTEM, AND PLANAR DRIVE SYSTEM
PROCÉDÉ DE COMMANDE D'UN SYSTÈME D'ENTRAÎNEMENT PLAN ET SYSTÈME D'ENTRAÎNEMENT PLAN

(30) Priorität: 14.10.2020 DE 102020127012
(43) Veröffentlichungstag der Anmeldung: 12.07.2023
(73) Patentinhaber: Beckhoff Automation GmbH, 33415 Verl (DE)
(72) Erfinder: ACHTERBERG, Jan, 47249 Duisburg (DE); PRUESSMEIER, Uwe, 32657 Lemgo (DE)
(74) Vertreter: Patentanwaltskanzlei WILHELM & BECK
(86) Internationale Anmeldenummer: PCT/EP2021/078245
(87) Internationale Veröffentlichungsnummer: WO 2022/079070

(56) Entgegenhaltungen:
- DE-A1- 19 945 584
- DE-A1-102009 013 778
- DE-A1-102016 205 513
- DE-C- 946 334

## Beschreibung

Die Erfindung betrifft ein Verfahren zum Steuern eines Planarantriebssystems und ein Planarantriebssystem, das eingerichtet ist, das Verfahren zum Steuern eines Planarantriebssystems auszuführen.

Planarantriebssysteme können unter anderem in der Automatisierungstechnik, insbesondere der Fertigungstechnik, der Handhabungstechnik und der Verfahrenstechnik eingesetzt werden. Mittels Planarantriebssystemen kann ein bewegliches Element einer Anlage oder Maschine in mindestens zwei linear unabhängigen Richtungen bewegt oder positioniert werden.

Planarantriebssysteme können einen permanenterregten elektromagnetischen Planarmotor mit einem planaren Stator und einem auf dem Stator in mindestens zwei Richtungen beweglichen Läufer umfassen.

Bei einem permanenterregten elektromagnetischen Planarmotor wird dadurch eine Antriebskraft auf den Läufer ausgeübt, dass stromdurchflossene Leiter mit Antriebsmagneten einer Magnetanordnung magnetisch wechselwirken. Die Erfindung betrifft insbesondere Ausgestaltungen von Planarantriebssystemen, bei denen die Antriebsmagneten eines elektrischen Planarmotors an dem Läufer und die stromdurchflossenen Leiter des Planarmotors in einem ortsfest angeordneten planaren Stator angeordnet sind.

Bei einem derartigen Antriebssystem umfasst der Läufer mindestens eine erste Magneteinheit für den Antrieb des Läufers in eine erste Richtung und eine zweite Magneteinheit für den Antrieb des Läufers in eine von der ersten Richtung linear unabhängige, beispielsweise in eine zu der ersten Richtung orthogonale, zweite Richtung. Der planare Stator umfasst mindestens eine Gruppe erster bestrombarer Leiter, welche mit den Magneten der ersten Magneteinheit magnetisch wechselwirken, um den Läufer in die erste Richtung anzutreiben, sowie eine Gruppe zweiter bestrombarer Leiter, welche mit den Magneten der zweiten Magneteinheit magnetisch wechselwirken, um den Läufer in die zweite Richtung anzutreiben. Die ersten und zweiten Gruppen von Leitern sind in der Regel unabhängig voneinander bestrombar, um voneinander unabhängige Bewegungen des Läufers in die erste und zweite Richtung zu ermöglichen. Sind die Leiter der ersten und zweiten Gruppe selbst zumindest in Teilen unabhängig voneinander bestrombar, können auf einem Stator zeitgleich mehrere Läufer unabhängig voneinander bewegt werden.

Das Planarantriebssystem ermöglicht somit eine Bewegung eines Läufers auf beliebigen Bahnen zwischen einem Start- und einem Endpunkt. Dies ermöglicht einen maximalen Grad an Flexibilität, indem die Bewegung nicht auf vordefinierte Bahnen eingeschränkt ist.

Planarantriebssysteme sind somit optimal eingerichtet für den Transport von Objekten, beispielsweise innerhalb eines Produktionsprozesses, bei dem zu verarbeitende Komponenten eines Produkts zwischen einzelnen Verarbeitungsstationen transportiert werden müssen. Ein derartiger Transport setzt ein Beladen und Entladen der zu transportierenden Objekte auf das jeweils verwendete Transportmedium in Belade- und Entladestationen voraus. Häufig ist es in solchen Prozessen vorteilhaft, wenn das zu transportierende Objekt in einer bestimmten Position oder Ausrichtung auf dem Transportmedium angeordnet ist, da hierdurch ein Entladen in weiteren Prozessschritten vereinfacht ist.

Dies setzt für gewöhnlich ein umständliches und zeitintensives Umorientieren oder Sortieren des transportierten Objekts beziehungsweise der transportierten Objekte mit entsprechenden hierzu eingerichteten Vorrichtungen voraus. Hierdurch wird der Transportvorgang zum Einen verzögert, da entweder vor oder nach dem Transportieren das Objekt oder die Objekte umorientiert oder sortiert werden müssen. Zum Anderen wird die Komplexität des Transportsystems erhöht, da eine zusätzliche Komponente in Form einer entsprechend ausgestalteten Orientierungs-/Sortiervorrichtung beziehungsweise einer Mehrzahl entsprechender Vorrichtungen benötigt wird.

Aus der Druckschrift DE 10 2016 205 513 A1 sind ein Verfahren zum Transportieren eines Gutes, ein mehrdimensionaler Antrieb und eine Verarbeitungsvorrichtung bekannt. Aus der Druckschrift DE 10 2009 013 778 A1 ist eine Positioniereinrichtung für einen Probenträger bekannt. Aus der Druckschrift DE 946 334 C ist eine Rüttelvorrichtung zum Verdichten von Schüttgut in einem Behälter bekannt. Aus der Druckschrift DE 199 45 584 A1 ist ein mehrdimensionaler Antrieb für Arbeitsmaschinen bekannt.

Darüber hinaus werden je nach Art der zu transportierenden Objekte unterschiedliche Orientierungs-/Sortiervorrichtungen benötigt, die jeweils auf das Orientieren oder Sortieren einer Art von Objekten eingerichtet sind, für Objekte anderer Art aber gegebenenfalls ungeeignet sind.

Es ist daher eine Aufgabe der Erfindung, ein Verfahren zum Steuern eines Planarantriebssystems bereitzustellen, das aufgrund einer verbesserten Steuerung eines Läufers einen verbesserten und vereinfachten Transport von zu transportierenden Objekten ermöglicht. Eine weitere Aufgabe der Erfindung ist es, ein Planarantriebssystem bereitzustellen, das eingerichtet ist, das erfindungsgemäße Verfahren auszuführen.

Die Aufgaben werden durch ein Verfahren zum Steuern eines Planarantriebssystems und ein Planarantriebssystem gemäß den unabhängigen Ansprüchen gelöst. Bevorzugte Ausführungsformen sind in den abhängigen Ansprüchen angegeben.

Nach einem Aspekt wird ein Verfahren zum Steuern eines Planarantriebssystems bereitgestellt, wobei das Planarantriebssystem wenigstens eine Steuereinheit, ein Statormodul mit einer Statoroberfläche und einen auf der Statoroberfläche positionierbaren und verfahrbaren Läufer umfasst, wobei zwischen einem Läufermagnetfeld des Läufers und durch das Statormodul generierbaren Statormagnetfeldern eine magnetische Kopplung erzielbar ist, und wobei über eine gezielte Ansteuerung der Statormagnetfelder eine Bewegung des Läufers relativ zum Statormodul ermöglicht ist, und wobei das Verfahren umfasst:
Positionieren eines Objekts auf einem Läufer in einem ersten Anordnungszustand des Objekts in einem Positionierschritt;
Ausführen einer Beschleunigungsbewegung eines definierten Bewegungsmusters des Läufers und durch die Beschleunigungsbewegung Anordnen des auf dem Läufer in dem ersten Anordnungszustand positionierten Objekts in einem zweiten Anordnungszustand in einem Anordnungsschritt, wobei die Beschleunigungsbewegung des Läufers durch ein entsprechendes Ansteuern der Statormagnetfelder erreicht wird, wobei das Bewegungsmuster wenigstens einen Beschleunigungspuls mit einer Beschleunigungsstärke und einer Beschleunigungsdauer in eine Beschleunigungsrichtung umfasst, wobei das Bewegungsmuster eine beschleunigte Translationsbewegung in eine Translationsbeschleunigungsrichtung und/oder eine beschleunigte Rotationsbewegung um eine Rotationsachse umfasst, und wobei die Translationsbeschleunigungsrichtung und/oder die Rotationsachse in einer beliebigen Raumrichtung orientiert sind.

Hierdurch kann der technische Vorteil erreicht werden, dass ein verbessertes Verfahren zum Steuern eines Planarantriebssystems bereitgestellt werden kann, das eine Änderung eines Anordnungszustands eines auf einem Läufer des Planarantriebssystems positionierten Objekts während eines Transportvorgangs des Objekts ermöglicht. Diese Änderung des Anordnungszustands des zu transportierenden Objekts kann insbesondere ohne Verwendung einer zusätzlichen Vorrichtung zum Ändern des Anordnungszustands ausschließlich durch ein entsprechendes Steuern des Läufers erreicht werden.

Hierzu wird der Läufer zum Ausführen einer Beschleunigungsbewegung gemäß eines definierten Bewegungsmusters angetrieben, sodass durch die Beschleunigungsbewegung des Läufers ein Anordnungszustand eines auf dem Läufer positionierten Objekts verändert wird. Die Beschleunigungsbewegung des Läufers wird hierbei durch entsprechendes Ansteuern der Statormagnetfelder des Statormoduls des Planarantriebssystems bewirkt. Das jeweilige Bewegungsmuster, nach dem die Beschleunigungsbewegung ausgeführt wird, umfasst hierbei eine beschleunigte Translationsbewegung entlang einer Translationsbeschleunigungsrichtung und/oder eine beschleunigte Rotationsbewegung um eine Rotationsachse. Die beschleunigte Translationsbewegung oder die beschleunigte Rotationsbewegung weist wenigstens einen Beschleunigungspuls mit einer Beschleunigungsstärke und einer Beschleunigungsdauer in eine Beschleunigungsrichtung auf.

Durch das ruckartige Beschleunigen in Form des Beschleunigungspulses kann ein derzeitiger Anordnungszustand des Objekts auf dem Läufer in einen gewünschten Anordnungszustand geändert werden, indem aufgrund der trägen Masse des auf dem Läufer unbefestigt angeordneten Objekts infolge der ruckartigen Beschleunigung des Läufers das Objekt zu Ausführung einer Relativbewegung relativ zum Läufer angetrieben wird, wodurch eine Änderung des Anordnungszustands bewirkt wird. Durch das Abbremsen des Läufers, wodurch die beschleunigte Translationsbewegung beziehungsweise die beschleunigte Rotationsbewegung des Läufers abgebremst wird, kann eine Positionierung des Objekts in dem geänderten Anordnungszustand auf dem Läufer erreicht werden.

Darauf folgend kann das Objekt in dem geänderten Anordnungszustand beispielsweise vom Läufer entladen oder in der geänderten Anordnung auf dem Läufer positioniert verarbeitet werden.

Ein Objekt ist im Sinne der Anmeldung ein Gegenstand beziehungsweise eine Mehrzahl von Gegenständen, der oder die durch Anwendung des Verfahrens in einen anderen Anordnungszustand gebracht werden sollen. Das Objekt kann hierbei als ein dreidimensionales Festkörperobjekt ausgebildet sein und beispielsweise ein Produkt oder Teilprodukt eines Produktionsprozesses oder eines Verarbeitungsprozesses oder auch eines Transportprozesses sein. Darüber hinaus kann das Objekt flüssig beziehungsweise pulverförmig oder granulatförmig ausgebildet sein und innerhalb eines Behälters angeordnet sein.

Eine ruckartige Beschleunigung in Form eines Beschleunigungspulses ist im Sinne der Anmeldung eine kurzzeitige plötzliche Beschleunigung mit einer definierten Beschleunigungsstärke und einer definierten Beschleunigungsdauer in Form einer Pulsbreite des Beschleunigungspulses. Eine Beschleunigungsstärke ist im Sinne der Anmeldung ein Wert einer Geschwindigkeitsänderung des bewegten Läufers.

Ein Anordnungszustand beschreibt im Sinne der Anmeldung eine Ausrichtung des auf dem Läufer positionierten Objekts relativ zum Läufer. In Abhängigkeit des jeweiligen Objekts kann ein Anordnungszustand eine Orientierung und/oder Ausrichtung des Objekts zum Läufer umfassen. Darüber hinaus kann ein Anordnungszustand einen Ordnungsgrad beziehungsweise Sortiergrad einer Mehrzahl von Objekten oder Gegenständen zueinander umfassen. Zusätzlich kann ein Anordnungszustand ein Mischungsgrad/-Zustand oder Entmischungsgrad/-Zustand beziehungsweise einen Lösungsgrad/-Zustand eines granulatförmigen, pulverförmigen oder flüssigen Objekts mit wenigstens zwei Bestandteilen umfassen.

Nach einem zweiten Aspekt wird ein Planarantriebssystem mit wenigstens einer Steuereinheit, einem Statormodul mit einer Statoroberfläche und einem auf der Statoroberfläche positionierbaren Läufer bereitgestellt, wobei zwischen einem Läufermagnetfeld des Läufers und durch das Statormodul generierbaren Statormagnetfeldern eine magnetische Kopplung erzielbar ist, wobei über eine gezielte Ansteuerung der Statormagnetfelder eine Bewegung des Läufers relativ zum Statormodul ermöglicht, und wobei das Planarantriebssystem ausgebildet ist, das erfindungsgemäße Verfahren auszuführen.

Hierdurch kann der technische Vorteil erreicht werden, dass ein Planarantriebssystem bereitgestellt werden kann, das das erfindungsgemäße Verfahren mit den genannten Vorteilen ausführen kann.

Nach einer Ausführungsform umfasst das Bewegungsmuster eine Überlagerung einer Mehrzahl von beschleunigten Translationsbewegungen in unterschiedlich orientierte Translationsbeschleunigungsrichtungen und/oder einer Mehrzahl von beschleunigten Rotationsbewegungen um verschiedene Rotationsachsen.

Hierdurch kann der technische Vorteil erreicht werden, dass eine Beschleunigungsbewegung mit einem beliebig komplexen Bewegungsmuster bestehend aus einer Mehrzahl überlagerter beschleunigter Translationsbewegungen und/oder einer Mehrzahl beschleunigter Rotationsbewegungen erzielt werden kann. Je nach Art des Objektes und des jeweiligen Anordnungszustands kann somit ein entsprechendes Bewegungsmuster erzeugt werden, das geeignet ist, das Objekt in den jeweils bevorzugten Anordnungszustand zu überführen.

Nach einer Ausführungsform umfasst das Bewegungsmuster ein oszillatorisches Bewegungsmuster mit zeitlich aufeinanderfolgenden Beschleunigungspulsen in entgegengesetzt orientierte Beschleunigungsrichtungen, wobei das Bewegungsmuster eine variierbare Frequenz und/oder Amplitude und/oder Pulsbreite der zeitlich aufeinander folgenden Beschleunigungspulse aufweist.

Hierdurch kann der technische Vorteil erreicht werden, dass durch Anwenden des oszillatorischen Bewegungsmusters eine Rüttel- beziehungsweise Rührfunktion des Läufers erzielt werden kann. Durch Anwenden des oszillatorischen Bewegungsmusters, das beispielsweise ausschließlich aus beschleunigten Translationsbewegungen besteht, kann eine Rüttelfunktion generiert werden, bei der der Läufer entlang einer oder mehrerer Translationsbeschleunigungsrichtungen hin und herbewegt wird, wodurch ein auf dem Läufer angeordnetes Objekt hin und hergerüttelt wird. Hierdurch kann eine Sortierfunktion eines aus mehreren Objekten bestehenden Objekts oder eine Verdichtungsfunktion eines als Schüttgut ausgestalteten Objekts erreicht werden. Ferner kann durch das oszillatorische Bewegungsmuster, das beispielsweise ausschließlich eine beschleunigte Rotationsbewegung um eine Rotationsachse umfasst, eine Rührfunktion beziehungsweise Vermischung-Entmischungsfunktion eines als Fluid ausgebildeten Objekts erreicht werden, indem durch ein Hin- und Herrotieren des Läufers um die Rotationsachse das in einem Behälter angeordnete Objekt durchmischt beziehungsweise entmischt werden kann.

Durch oszillatorische Bewegungsmuster mit Beschleunigungspulsen unterschiedlicher Beschleunigungsdauer kann ferner eine effektive Bewegung des Läufers relativ zum Statormodul erreicht werden, in der der Läufer durch die oszillatorisch beschleunigte Bewegung nach Beendigung der Bewegung in einer anderen Position auf dem Statormodul positioniert ist als vor Beginn der Bewegung.

Alternativ sind Kombinationen aus beschleunigten Translations- und beschleunigten Rotationsbewegungen des Läufers möglich.

Nach einer Ausführungsform ist das Bewegungsmuster ein individuell an das anzuordnende Objekt anpassbares Bewegungsmuster, wobei eine Translationsbeschleunigungsrichtung und/oder eine Rotationsachse und/oder eine Anzahl von aufeinanderfolgenden Beschleunigungspulsen und/oder eine Frequenz und/oder eine Beschleunigungsstärke der Beschleunigungspulse und/oder eine Beschleunigungsdauer der Beschleunigungspulse und/oder eine Ausführungsdauer des Bewegungsmusters anpassbar sind, oder ein vordefiniertes Bewegungsmuster einer Mehrzahl von vordefinierten und in einer Datenbank hinterlegten Bewegungsmuster mit vordefinierter Translationsbeschleunigungsrichtung und/oder mit vordefinierter Rotationsachse und/oder mit vordefinierter Anzahl von aufeinanderfolgenden Beschleunigungspulsen und/oder vordefinierter Frequenz und/oder mit vordefinierter Beschleunigungsstärke der Beschleunigungspulse und/oder mit vordefinierter Beschleunigungsdauer der Beschleunigungspulse und/oder mit vordefinierter Ausführungsdauer des Bewegungsmusters ist.

Hierdurch kann der technische Vorteil erreicht werden, dass eine flexible Gestaltung der Bewegungsmuster ermöglicht ist. So kann in Abhängigkeit der Art des Objektes beziehungsweise der jeweiligen Anordnungszustände das verwendete Bewegungsmuster individuell angepasst werden, um somit ein optimales Bewegungsmuster generieren zu können, das eingerichtet ist, das auf dem Läufer positionierte Objekt in den angestrebten Anordnungszustand zu bringen. Hierdurch wird eine maximale Flexibilität erreicht. Hierzu können insbesondere eine Translationsbeschleunigungsrichtung und/oder eine Ausrichtung einer Rotationsachse und/oder eine Anzahl von aufeinanderfolgenden Beschleunigungspulsen und/oder eine Frequenz und/oder eine Beschleunigungsstärke der Beschleunigungspulse und/oder eine Beschleunigungsdauer der Beschleunigungspulse und/oder eine Ausführungsdauer des Bewegungsmusters angepasst werden.

Alternativ hierzu kann ein vorbestimmtes Bewegungsmuster verwendet werden, um das Objekt in den zweiten Anordnungszustand zu versetzen. Hierdurch kann das Verfahren zum Steuern des Planarantriebssystems vereinfacht werden, indem auf vordefinierte Bewegungsmuster zurückgegriffen werden kann. Die vordefinierten Bewegungsmuster können für bestimmte Arten von Objekten und/oder Anordnungszuständen klassifiziert sein. Je nach Art des jeweils zu transportierenden Objekts und/oder in Abhängigkeit des jeweils zu erreichenden zweiten Anordnungszustands und/oder des jeweils vorliegenden ersten Anordnungszustands des Objekts kann ein passendes vordefiniertes Bewegungsmuster aus einer Mehrzahl verschiedener Bewegungsmuster ausgewählt werden, das jeweils geeignet ist ein Objekt einer bestimmten Art aus einem bestimmten vorliegenden ersten Anordnungszustand in einen bestimmten angestrebten zweiten Anordnungszustand zu bewegen. Die Bewegungsmuster können hierbei vordefinierte Translationsbeschleunigungsrichtungen und/oder mit vordefiniert orientierten Rotationsachsen und/oder mit vordefinierte Anzahlen von aufeinanderfolgenden Beschleunigungspulsen und/oder vordefinierte Frequenzen der oszillatorischen Bewegungsmuster und/oder vordefinierte Beschleunigungsstärken der Beschleunigungspulse und/oder vordefinierte Beschleunigungsdauern der Beschleunigungspulse und/oder vordefinierte Ausführungsdauern des Bewegungsmusters aufweisen.

Nach einer Ausführungsform umfasst das Bewegungsmuster ferner eine Bremsbewegung, wobei die Bremsbewegung eine der Beschleunigungsrichtung des Beschleunigungspulses entgegen gerichtete Beschleunigungsrichtung aufweist, wobei die Bremsbewegung eine geringere Beschleunigungsstärke und/oder eine größere Beschleunigungsdauer und/oder eine geringere zeitliche Beschleunigungsänderung als der Beschleunigungspuls aufweist, und wobei die Bremsbewegung den Läufer in eine Ausgangsposition des Läufers vor Beginn der Beschleunigungsbewegung bewegt.

Hierdurch kann der technische Vorteil erreicht werden, dass durch die Bremsbewegung, die im Vergleich zum Beschleunigungspuls einen flachen Verlauf und eine geringe zeitliche Beschleunigungsänderung aufweist die Relativbewegung des Objekts relativ zum Läufer beendet werden und das Objekt somit im zweiten Anordnungszustand auf dem Läufer positioniert werden kann, ohne dass die Bremsbewegung eine erneute Änderung des Anordnungszustands des Objekts bewirkt. Durch das Bewegen des Läufers zurück in die Ausgangsposition, in der der Läufer vor Ausführung der Beschleunigungsbewegung positioniert war, kann erreicht werden, dass die Beschleunigungsbewegung des Läufers, die primär zur Änderung des Anordnungszustands des Objekts auf dem Läufer dient, kein effektives Verfahren des Läufers zwischen zwei Positionen auf dem Statormodul bewirkt.

Nach einer Ausführungsform umfasst das Verfahren ferner:
Verfahren des Läufers aus einer ersten Position des Läufers relativ zum Statormodul in eine zweite Position des Läufers relativ zum Statormodul und Transportieren des auf dem Läufer angeordneten Objekts in einem Transportschritt, wobei die Beschleunigungsbewegung zeitgleich zum Verfahren des Läufers ausgeführt wird.

Hierdurch kann der technische Vorteil erreicht werden, dass während des Transportprozesses des Objekts zwischen den Belade- und Entladepositionen das auf dem Läufer positionierte Objekt in den gewünschten Anordnungszustand versetzt werden kann. Hierdurch kann der Transportprozess beschleunigt werden, indem das Objekt unmittelbar bei Erreichen der Entladeposition oder der Bearbeitungsposition in dem gewünschten Anordnungszustand entladen beziehungsweise bearbeitet werden kann.

Nach einer Ausführungsform umfasst das Verfahren ferner:
Entladen des Objekts in dem zweiten Anordnungszustand vom Läufer in der zweiten Position des Läufers relativ zum Statormodul in einem Entladeschritt.

Hierdurch kann der technische Vorteil erreicht werden, dass die Änderung des Anordnungszustands des Objekts auf dem Läufer in einen Transportprozess integrierbar ist, sodass während des Transports der Anordnungszustand derart verändert werden kann, dass das Objekt im gewünschten Anordnungszustand entladen werden kann. Alternativ zur Entladung des Objekts kann das Objekt auch im geänderten zweiten Anordnungszustand verarbeitet werden.

Nach einer Ausführungsform umfasst das Verfahren ferner:
Bestimmen einer Art des Objekts, eines ersten Anordnungszustands und eines zu erzielenden zweiten Anordnungszustands des Objekts in einem ersten Bestimmungsschritt, wobei die Art des Objekts eine Größe, eine Gestalt, eine Masse, eine Form, eine Schüttguteigenschaft, eine Flüssigkeitseigenschaft, ein Durchmischungsgrad und einen Lösungsgrad umfasst, wobei der erste Anordnungszustand und der zweite Anordnungszustand in Abhängigkeit der Art des Objekts eine Positionierung und/oder Orientierung relativ zum Läufer, ein Verdichtungsgrad, ein Durchmischungsgrad, Entmischungsgrad, ein Lösungsgrad, des Objekts umfasst; und
Auswählen eines Bewegungsmusters aus einer Liste möglicher Bewegungsmuster, wobei das Bewegungsmuster eine Translationsbeschleunigungsrichtung und/oder eine Rotationsachse und/oder eine Anzahl von aufeinanderfolgenden Beschleunigungspulsen und/oder eine Frequenz und/oder eine Beschleunigungsstärke der Beschleunigungspulse und/oder eine Beschleunigungsdauer der Beschleunigungspulse und/oder eine Ausführungsdauer des Bewegungsmusters definiert, die geeignet ist oder sind, das Objekt aus dem ersten Anordnungszustand in den zweiten Anordnungszustand anzuordnen, in einem Bewegungsmusterauswahlschritt.

Hierdurch kann der technische Vorteil erreicht werden, dass ein Bewegungsmuster individuell auf das jeweilige Objekt angepasst werden kann. Hierdurch kann erreicht werden, dass ein ideales Bewegungsmuster ausgewählt werden kann, das geeignet ist, das Objekt in den gewünschten zweiten Anordnungszustand zu bringen. Hierzu kann zunächst die Art des Objektes beziehungsweise die ersten und zweiten Anordnungszustände bestimmt werden. Die Art des Objektes kann hierbei eine Größe, eine Gestalt, eine Masse, eine Form, eine Schüttguteigenschaft, eine Flüssigkeitseigenschaft, ein Durchmischungsgrad oder einen Lösungsgrad umfassen. Da das Objekt sowohl als ein einzelnes dreidimensionales Objekt beziehungsweise als eine Mehrzahl von dreidimensionalen Objekten, beispielsweise einzelnen Bauteilen, oder auch als ein Schüttgut beziehungsweise eine Flüssigkeit ausgebildet sein kann, weisen verschiedene Bewegungsmuster, die jeweils geeignet sind, das jeweilige Objekt in einen modifizierten Anordnungszustand zu bringen, unterschiedliche Charakteristiken auf. So kann in Abhängigkeit der Masse des auf dem Läufer positionierten Objekts eine höhere oder niedrigere Beschleunigungsstärke gewählt werden, um eine Änderung des jeweiligen Anordnungszustands bewirken zu können. Gleichzeitig kann bei Wahl des verwendeten Bewegungsmusters berücksichtigt werden, ob das zu transportierende Objekt jeweils als ein Objekt oder als eine Mehrzahl loser oder miteinander in Verbindung stehender Objekte ausgebildet ist. Darüber hinaus kann eine Form des Objekts beziehungsweise der Objekte wie auch andere Materialeigenschaften zur Auswahl des geeigneten Bewegungsmusters in Erwägung gezogen werden. Gleiches gilt für ein Objekt, das als Schüttgut beziehungsweise Fluid ausgebildet ist. Auch diese Eigenschaften können gegebenenfalls bei Wahl des geeigneten Bewegungsmusters berücksichtigt werden. Das ausgewählte Bewegungsmuster kann dabei eine Translationsbeschleunigungsrichtung und/oder eine Ausrichtung einer Rotationsachse und/oder eine Anzahl von aufeinanderfolgenden Beschleunigungspulsen und/oder eine Frequenz und/oder eine Beschleunigungsstärke der Beschleunigungspulse und/oder eine Beschleunigungsdauer der Beschleunigungspulse und/oder eine Ausführungsdauer des Bewegungsmusters definieren, die jeweils geeignet ist oder sind, das Objekt aus dem ersten in den zweien Anordnungszustand anzuordnen.

In Abhängigkeit der jeweiligen Art des Objekts können sich die Anordnungszustände unterscheiden, die das jeweilige Objekt auf dem Läufer einnehmen kann. So kann für ein Objekt, das als ein dreidimensionales Objekt beziehungsweise eine Mehrzahl dreidimensionaler Objekte oder Bestandteile beziehungsweise Bauteile ausgebildet ist, ein Anordnungszustand eine Position und eine Orientierung beziehungsweise Ausrichtung des Objekts relativ zum Läufer umfassen. Darüber hinaus kann ein Anordnungszustand eine Ordnung zwischen den einzelnen Objekten berücksichtigen. Unterschiedliche Anordnungszustände können sich dabei in der jeweiligen Position oder Orientierung unterscheiden, die das jeweilige Objekt auf dem Läufer einnimmt. Alternativ können verschiedene Anordnungszustände unterschiedliche Ordnungen zwischen den einzelnen Objekten beschreiben. Für ein als Schüttgut ausgebildetes Objekt, das in einen Behälter eingefüllt auf dem Läufer angeordnet ist, kann ein Anordnungszustand einen Verdichtungsgrad beziehungsweise eine Durchmischung oder Entmischung umfassen. Unterschiedliche Anordnungszustände können hierbei beispielsweise eine Befüllung des Behälters mit dem jeweiligen Schüttgut mit unterschiedlicher Verdichtung, beziehungsweise im Falle eines Schüttguts mit mehreren Komponenten beziehungsweise Bestandteilen eine Durchmischung beziehungsweise Trennung der einzelnen Bestandteile beschreiben. Gleiches gilt für Flüssigkeiten, für die unterschiedliche Anordnungszustände einen unterschiedlichen Grad an Durchmischung beziehungsweise Trennung oder Lösung einzelner Bestandteile der Flüssigkeit beschreiben können.

Nach Bestimmen der Art des Objektes beziehungsweise der einzelnen Anordnungszustände kann das jeweils geeignete Bewegungsmuster aus einer Mehrzahl von bereitgestellten Bewegungsmustern ausgewählt werden. Die einzelnen Bewegungsmuster können hierbei eingerichtet sein, beispielsweise ein Objekt einer bestimmten Größe, Form und Masse in eine bestimmte Position und Orientierung auf dem Läufer zu bewegen. Gleichzeitig können weitere Bewegungsmuster eingerichtet sein, einzelne Komponenten eines Schüttguts miteinander zu vermischen beziehungsweise voneinander zu trennen, oder ein Schüttgut innerhalb eines Behälters zu verdichten, beziehungsweise einen Bestandteil in einer Flüssigkeit zu lösen. Hierdurch kann ein möglichst breiter Einsatzbereich des erfindungsgemäßen Verfahrens bereitgestellt werden, wobei das Verfahren über entsprechende Orientierungs-, Sortier-, Positionierungs-, Verdichtungs-, Mischungs-, Entmischungs-, Lösungs- oder Portionierungsfunktionen verfügt.

Nach einer Ausführungsform umfasst der Anordnungsschritt:
Überwachen des Objekts während des Anordnungsschritts und Detektieren eines Anordnungszustands des Objekts in einem ersten Detektionsschritt;
Anpassen der Ausführung der Beschleunigungsbewegung im Anordnungsschritt auf Basis des detektierten Anordnungszustands in einem Anpassungsschritt, wobei das Anpassen ein Fortsetzen der Ausführung der Beschleunigungsbewegung, ein Modifizieren der Beschleunigungsstärke und/oder der Beschleunigungsrichtung, oder eine Modifikation des Bewegungsmusters umfasst, wobei das Anpassen der Ausführung der Beschleunigungsbewegung ein Anpassen des Bewegungsmusters oder ein Ausführen eines weiteren Bewegungsmusters umfasst; und/oder
Überwachen des Objekts während des Anordnungsschritts und Detektieren des Objekts in dem zweiten Anordnungszustand und beenden der Beschleunigungsbewegung in einem Detektionsschritt.

Hierdurch kann der technische Vorteil erreicht werden, dass ein möglichst effizientes Ändern des Anordnungszustands des auf dem Läufer positionierten Objekts erreicht werden kann. Hierzu kann das Ergebnis der ausgeführten Beschleunigungsbewegung auf das jeweils auf dem Läufer positionierte Objekt überwacht und eine Fortsetzung beziehungsweise Beendigung oder Anpassung der jeweils ausgeführten Beschleunigungsbewegung auf Basis der erzielten Wirkung beurteilt werden. Durch die Überwachung des Objekts während der Ausführung der Beschleunigungsbewegung können der jeweilige Anordnungszustand des Objekts bestimmt werden und hierauf basierend die jeweilige Beschleunigungsbewegung fortgesetzt werden, wenn der angestrebte Anordnungszustand nicht erreicht wurde, beziehungsweise die jeweilige Beschleunigungsbewegung beendet werden, wenn der angestrebte Anordnungszustand erreicht wurde. Alternativ kann das jeweilige Bewegungsmuster angepasst werden, wenn das verwendete Bewegungsmuster zu keinem erkennbaren Erfolg führt. Eine Anpassung des Bewegungsmusters kann eine Anpassung der Translationsbeschleunigungsrichtung und/oder der Ausrichtung der Rotationsachse und/oder der Anzahl von aufeinanderfolgenden Beschleunigungspulsen und/oder der Frequenz des Bewegungsmusters und/oder der Beschleunigungsstärke der Beschleunigungspulse und/oder der Beschleunigungsdauer der Beschleunigungspulse und/oder der Ausführungsdauer des Bewegungsmusters umfassen. Alternativ oder zusätzlich kann eine Anpassung des Bewegungsmusters einen Wechsel zwischen einer beschleunigten Translations- und Rotationsbewegung umfassen. Alternativ oder zusätzlich kann eine Anpassung des Bewegungsmusters eine Überlagerung einer Mehrzahl von beschleunigten Translations- und/oder Rotationsbewegungen umfassen. Alternativ kann eine Anpassung des Bewegungsmusters einen Wechsel zu oder von einem oszillatorischen Bewegungsmuster umfassen.

Nach einer Ausführungsform wird das Bestimmen der Art des Objekts im Bestimmungsschritt und/oder das Auswählen des Bewegungsmusters im Bewegungsmusterauswahlschritt und/oder das Detektieren des Anordnungszustands im ersten Detektionsschritt und/oder das Anpassen des Bewegungsmusters im Anpassungsschritt und/oder das Detektieren des Objekts im zweiten Anordnungszustand im zweiten Detektionsschritt durch ein entsprechend trainiertes neuronales Netz oder durch eine Mehrzahl entsprechend trainierter neuronales Netz durchgeführt.

Hierdurch kann der technische Vorteil erreicht werden, dass das Bestimmen der Art des Objekts im Bestimmungsschritt und/oder das Auswählen des Bewegungsmusters im Bewegungsmusterauswahlschritt und/oder das Detektieren des Anordnungszustands im ersten Detektionsschritt und/oder das Anpassen des Bewegungsmusters im Anpassungsschritt und/oder das Detektieren des Objekts im zweiten Anordnungszustand im zweiten Detektionsschritt präzise und automatisch durchgeführt werden können.

Nach einer Ausführungsform umfassen der erste Detektionsschritt und/oder der zweite Detektionsschritt:
Ermitteln einer magnetischen Kraft, die benötigt wird, mittels der magnetischen Kopplung zwischen dem Läufermagnetfeld und dem Statormagnetfeld den Läufer in einer Schwebeposition oberhalb der Statoroberfläche des Statormoduls zu halten, und/oder die benötigt wird, mittels der magnetischen Kopplung zwischen dem Läufermagnetfeld und dem Statormagnetfeld den Läufer in der Beschleunigungsbewegung zu beschleunigen und/oder abzubremsen, und/oder die benötigt wird, mittels der magnetischen Kopplung zwischen dem Läufermagnetfeld und dem Statormagnetfeld den Läufer zu verfahren, in einem Kraftermittlungsschritt; und
Ermitteln des ersten Anordnungszustands und/oder des zweiten Anordnungszustands unter Berücksichtigung der benötigten magnetischen Kraft.

Hierdurch kann der technische Vorteil erreicht werden, dass die Überwachung des auf dem Läufer positionierten Objekts während der Ausführung der Beschleunigungsbewegung über das zum Antrieb des Läufers verwendete Statormodul durchgeführt werden kann und somit keine zusätzliche Vorrichtung benötigt wird.

Hierzu kann durch das Statormodul eine Schwerpunktsmessung durchgeführt werden, auf deren Basis ein Anordnungszustand des Objekts auf dem Läufer bestimmt werden kann. Zur Durchführung der Schwerpunktsmessung kann eine magnetische Kraft bestimmt werden, die durch das Statormodul aufgewendet werden muss, um den Läufer inklusive des auf dem Läufer positionierten Objekts in einem Schwebezustand oberhalb des Statormoduls zu halten. Je nach Positionierung des Objekts auf dem Läufer ändert sich der Schwerpunkt des Läufers, was dazu führt, dass zum Beibehalten des Schwebezustands eine modifizierte magnetische Kraft durch das Statormodul aufgewendet wird. Hierüber kann je nach Art des auf dem Läufer positionierten Objekts eine Änderung des Anordnungszustands ermittelt werden. Alternativ kann durch das Statormodul eine zur Durchführung der Beschleunigungsbewegung beziehungsweise eine zum Verfahren des Läufers benötigte magnetische Kraft eine Positionierung beziehungsweise Orientierung des auf dem Läufer positionierten Objekts ermittelt werden, da auch hier in Abhängigkeit der Positionierung beziehungsweise Orientierung zur Durchführung einer entsprechenden Bewegung des Läufers eine modifizierte magnetische Kraft durch das Statormodul aufzuwenden ist.

Eine magnetische Kraft kann insbesondere eine 1-dimensionale oder 2-dimensionale oder 3-dimensionale Kraftverteilung umfassen.

Nach einer Ausführungsform umfassen der erste Detektionsschritt und/oder der zweite Detektionsschritt:
Überwachen des Objekts auf dem Läufer über eine Überwachungseinrichtung in einem Überwachungsschritt, wobei die Überwachungseinrichtung als eine optische Überwachungseinrichtung oder als eine akustische Überwachungseinrichtung oder als eine elektromagnetische Überwachungseinrichtung ausgebildet und eingerichtet ist, durch Empfangen entsprechender optischer oder akustischer oder elektromagnetischer Messsignale einen Anordnungszustand des Objekts zu ermitteln.

Hierdurch kann der technische Vorteil erreicht werden, dass eine präzise Überwachung eines auf dem Läufer positionierten Objekts und insbesondere eine Ermittlung des jeweiligen Anordnungszustands erreicht werden kann. Über die Überwachung mittels einer optischen oder akustischen Überwachungsvorrichtung kann das auf dem Läufer positionierte Objekt zu jedem Zeitpunkt erkannt und ein aktueller Anordnungszustand ermittelt werden. Die optischen beziehungsweise akustischen oder elektromagnetische Überwachungsvorrichtungen können hierbei beliebige aus dem Stand der Technik bekannte Lösungen umfassen, die zur Überwachung von Objekten geeignet sind.

Nach einer Ausführungsform umfasst das Objekt ein Bauteil oder eine Mehrzahl von Bauteilen, wobei ein Anordnungszustand des Objekts eine Position jedes der Bauteile auf dem Läufer und/oder eine Orientierung jedes Bauteils relativ zum Läufer umfasst, wobei zwei Positionen eines Bauteils auf dem Läufer durch eine Translationsbewegung des Bauteils auf dem Läufer ineinander überführbar sind, und wobei zwei Orientierungen eines Bauteils relativ zum Läufer durch eine Rotation des Bauteils um eine Rotationsachse ineinander überführbar sind.

Hierdurch kann der technische Vorteil erreicht werden, dass das erfindungsgemäße Verfahren zum Anordnen beziehungsweise Orientieren oder Portionieren von dreidimensionalen Objekten, die beispielsweise als Bauteile beziehungsweise gefertigte Produkte ausgestaltet sind, verwendet werden kann.

Nach einer Ausführungsform umfasst das Objekt ein in einen Behälter befülltes Schüttgut, wobei ein Anordnungszustand des Objekts eine Befüllung des Schüttguts im Behälter mit einer bestimmten Fülldichte umfasst.

Hierdurch kann der technische Vorteil erreicht werden, dass das erfindungsgemäße Verfahren zum Verdichten eines als Schüttgut ausgestalteten Objekts verwendet werden kann.

Nach einer Ausführungsform umfasst das Objekt ein in einen Behälter befülltes Schüttgut und/oder Fluid mit wenigstens zwei Bestandteilen, wobei ein Anordnungszustand des Objekts eine Befüllung des Schüttguts oder Fluids im Behälter mit einer bestimmten Durchmischung oder Entmischung der wenigstens zwei Bestandteile umfasst.

Hierdurch kann der technische Vorteil erreicht werden, dass das erfindungsgemäße Verfahren zum Vermischen oder Entmischen eines als Schüttgut mit wenigstens zwei Bestandteilen oder eines als Fluid mit wenigstens zwei Bestandteilen ausgebildeten Objekts verwendet werden kann.

Nach einem weiteren Aspekt wird ein Verwenden des erfindungsgemäßen Verfahrens zum Sortieren einer Mehrzahl von Bauteilen in eine dafür vorgesehene Sortiervorrichtung durch Positionieren der Sortiervorrichtung und der Bauteile auf einem Läufer und Ausführen der Beschleunigungsbewegung des Läufers bereitgestellt, wobei die Sortiervorrichtung wenigste eine Aufnahmeöffnung aufweist, die geeignet ist, wenigstens ein Bauteil aufzunehmen.

Hierdurch kann der technische Vorteil erreicht werden, dass eine Sortierfunktion für eine Mehrzahl von dreidimensionalen Bauteilen, Produkten oder Gegenständen bereitgestellt werden kann.

Nach einem weiteren Aspekt wird ein Verwenden des Verfahrens zum Verdichten oder Auflockern eines Schüttguts in einem zur Aufnahme des Schüttguts vorgesehen Behälter durch Positionieren des mit dem Schüttgut befüllten Behälters auf einem Läufer und Ausführen der Beschleunigungsbewegung des Läufers bereitgestellt.

Hierdurch kann der technische Vorteil erreicht werden, dass eine Verdichtungs-/Auflockerungsfunktion eines Schüttguts bereitgestellt werden kann.

Alternativ kann der Behälter auf dem Läufer befestigt sein und der auf dem Läufer positionierte Behälter kann mit dem Schüttgut befüllt werden.

Nach einem weiteren Aspekt wird ein Verwenden des Verfahrens zum Durchmischen eines Schüttguts mit wenigstens zwei Komponenten in einem zur Aufnahme des Schüttguts vorgesehen Behälter durch Positionieren des mit dem Schüttgut befüllten Behälters auf einem Läufer und Ausführen der Beschleunigungsbewegung des Läufers bereitgestellt.

Hierdurch kann der technische Vorteil erreicht werden, dass eine Mischungsfunktion eines Schüttguts mit wenigstens zwei Komponenten beziehungsweise Bestandteilen bereitgestellt werden kann.

Alternativ kann der Behälter auf dem Läufer befestigt sein und der auf dem Läufer positionierte Behälter kann mit dem Schüttgut befüllt werden.

Nach einem weiteren Aspekt wird ein Verwenden des Verfahrens zum Entmischen eines Schüttguts mit wenigstens zwei Komponenten und Trennen der wenigstens zwei Komponenten in jeweils einen zur Aufnahme des Schüttguts vorgesehen Behälter durch Positionieren des mit dem Schüttgut befüllten Behälters auf einem Läufer und Ausführen der Beschleunigungsbewegung des Läufers bereitgestellt, wobei der Behälter ferner ein Siebelement umfasst.

Hierdurch kann der technische Vorteil erreicht werden, dass eine Entmischungs-/ Trennungsfunktion eines Schüttguts mit wenigstens zwei Komponenten beziehungsweise Bestandteilen bereitgestellt werden kann.

Alternativ kann der Behälter auf dem Läufer befestigt sein und der auf dem Läufer positionierte Behälter kann mit dem Schüttgut befüllt werden.

Nach einem weiteren Aspekt wird ein Verwenden des Verfahrens zum Vermischen eines Fluids mit wenigstens zwei Bestandteilen in einem zur Aufnahme des Fluids vorgesehen Behälter durch Positionieren des mit dem Fluid befüllten Behälters auf einem Läufer und Ausführen der Beschleunigungsbewegung des Läufers bereitgestellt.

Alternativ kann der Behälter auf dem Läufer befestigt sein und der auf dem Läufer positionierte Behälter kann mit dem Fluid befüllt werden.

Hierdurch kann der technische Vorteil erreicht werden, dass eine Mischungsfunktion eines Fluids mit wenigstens zwei Komponenten beziehungsweise Bestandteilen bereitgestellt werden kann.

Nach einem weiteren Aspekt wird ein Verwenden des Verfahrens zum Lösen eines Festkörperbestandteils in einem Fluid in einem zur Aufnahme des Fluids vorgesehen Behälter durch Positionieren des mit dem Fluid befüllten Behälters auf einem Läufer und Ausführen der Beschleunigungsbewegung des Läufers bereitgestellt.

Alternativ kann der Behälter auf dem Läufer befestigt sein und der auf dem Läufer positionierte Behälter kann mit dem Fluid befüllt werden.

Hierdurch kann der technische Vorteil erreicht werden, dass eine Lösungsfunktion eines Fluids mit wenigstens zwei Komponenten beziehungsweise Bestandteilen bereitgestellt werden kann.

Nach einem weiteren Aspekt wird ein Verwenden des Verfahren zum Portionieren eines portionierbaren Objekts durch Positionieren eines mit einem portionierbaren Objekts befüllten Behälters mit Portioniervorrichtung auf dem Läufer und Ausführen der Beschleunigungsbewegung des Läufers bereitgestellt.

Hierdurch kann der technische Vorteil erreicht werden, dass eine Portionierungsfunktion eines portionierbaren Objekts bereitgestellt werden kann.

Alternativ kann der Behälter auf dem Läufer befestigt sein und der auf dem Läufer positionierte Behälter kann mit dem zu portionierenden Objekt befüllt werden.

Ein portionierbares Objekt kann hierbei eine Mehrzahl von dreidimensionalen Bauteilen beziehungsweise Produkten umfassendes Objekt sein.

Nach einem weiteren Aspekt wird ein Verwenden des Verfahrens zum Entgraten eines Objektes durch Positionieren eines mit dem zu entgratenden Objekts befüllten Behälters auf dem Läufer und Ausführen der Beschleunigungsbewegung des Läufers bereitgestellt.

Hierdurch kann der technische Vorteil erreicht werden, dass ein Entgraten von Objekten erreicht werden kann, indem diese im Behälter hin und her bewegt werden und somit durch Kontakt mit der Behälterinnwand entgratet werden.

Alternativ kann der Behälter auf dem Läufer befestigt sein und der auf dem Läufer positionierte Behälter kann mit dem zu entgratenden Objekt befüllt werden.

Die Erfindung wird anhand der beigefügten Figuren näher erläutert. Hierbei zeigen:
- Fig. 1: eine schematische Darstellung eines Planarantriebssystems mit einem Statormodul und einem Läufer gemäß einer Ausführungsform;
- Fig. 2: eine schematische perspektivische Ansicht eines Sensormoduls des Statormoduls gemäß einer Ausführungsform;
- Fig. 3: eine schematische Darstellung einer Unterseite eines Läufers gemäß einer Ausführungsform;
- Fig. 4: ein Flussdiagramm eines Verfahrens zum Steuern eines Planarantriebssystems gemäß einer Ausführungsform;
- Fig. 5: ein weiteres Flussdiagramm des Verfahrens zum Steuern eines Planarantriebssystems gemäß einer weiteren Ausführungsform;
- Fig. 6: ein weiteres Flussdiagramm des Verfahrens zum Steuern eines Planarantriebssystems gemäß einer weiteren Ausführungsform;
- Fig. 7: eine schematische Darstellung eines Läufers auf einem Statormodul gemäß einer Ausführungsform;
- Fig. 8: eine schematische Darstellung eines Läufers auf einem Statormodul gemäß einer Ausführungsform;
- Fig. 9: eine schematische Darstellung eines Läufers auf einem Statormodul gemäß einer Ausführungsform;
- Fig. 10: eine schematische Darstellung eines Läufers auf einem Statormodul gemäß einer Ausführungsform; und
- Fig. 11: eine graphische Darstellung eines Bewegungsmusters gemäß einer Ausführungsform.

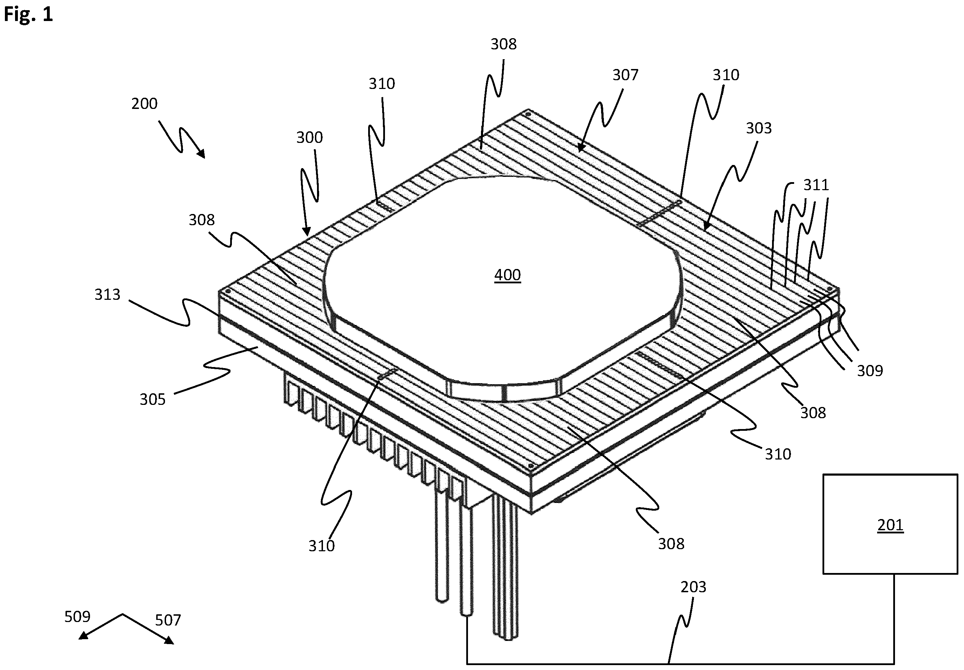

Fig. 1 zeigt eine schematische Ansicht eines Planarantriebssystems 200 mit einem Statormodul 300 und einem Läufer 400.

Gemäß der Ausführungsform in Fig. 1 umfasst das Planarantriebssystem eine Steuereinheit 201, ein Statormodul 300 und einen Läufer 400. Die Steuereinheit 201 ist über eine Datenverbindung 203 mit dem Statormodul 300 verbunden. Die Steuereinheit 201 ist eingerichtet, ein erfindungsgemäßes Verfahren 100 zum Steuern eines Planarantriebssystems 200 auszuführen.

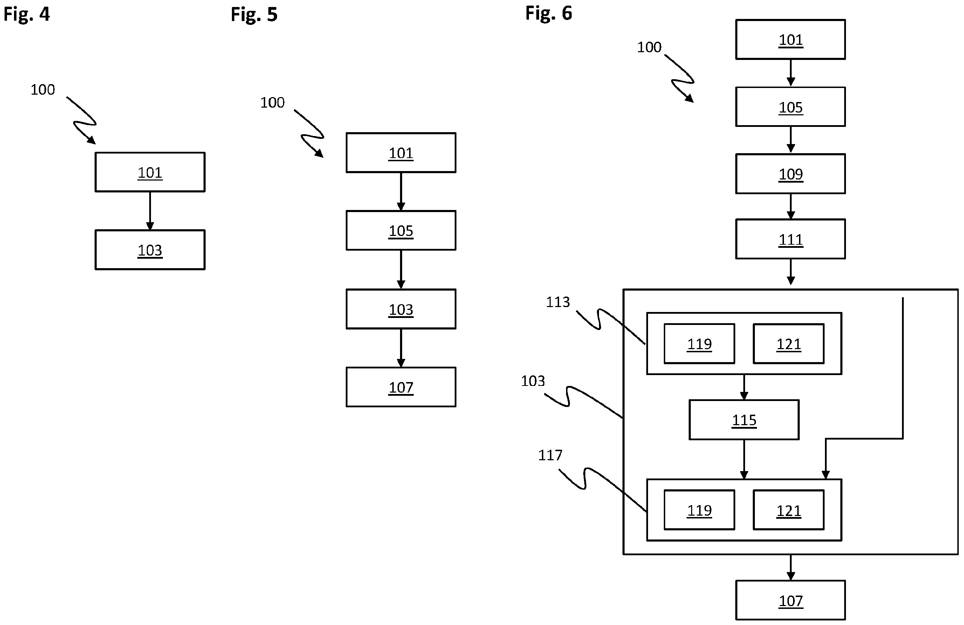

Für eine detaillierte Beschreibung des erfindungsgemäßen Verfahrens zum Steuern eines Planarantriebssystems 200 wird auf die Beschreibung zu den Fig. 4 bis Fig. 11 verwiesen.

Das Statormodul 300 hat eine ebene Statoroberfläche 303. Die ebene Statoroberfläche 303 ist an einer Oberseite eines Statormodulgehäuses 305 angeordnet. Oberhalb der Statoroberfläche 303 ist ein Läufer 400 angeordnet. Die Statoroberfläche 303 ist Teil einer Statoreinheit 307 für einen elektrischen Antrieb des Läufers 400. Die Statoreinheit 307 mit der Statoroberfläche 303 kann als Leiterplatte ausgeführt sein. Die Statoroberfläche 303 ist quadratisch ausgebildet.

Die Statoreinheit 307 weist vier Statorsegmente 308 auf, die über eine Kontaktstruktur 310 mit Elektronikmodulen (nicht dargestellt) im Inneren des Statormodulgehäuses 305 verbunden sind.

Der Läufer 400 ist oberhalb der Statoroberfläche 303 zumindest in eine erste Richtung 507 und in eine zweite Richtung 509 antreibbar. Die Statoroberfläche 303 weist mehrere Statorleiter 309 auf, die in der Ausführungsform in Fig. 1 als Statorleiter 309 ausgebildet sind, und die im Wesentlichen entlang der ersten Richtung 507 ausgerichtet sind. Die Statorleiter 309 sind stromleitend ausgebildet und über eine Bestromung der Statorleiter 309 können Statormagnetfelder generiert werden, die zum Antrieb des Läufers 400 dienen. Über eine magnetische Kopplung zwischen den Statormagnetfeldern und einem Läufermagnetfeld des Läufers 400 ist mittels einer geeigneten Variation der Statormagnetfelder durch ein entsprechendes Ansteuern durch die Steuereinheit 201 der Läufer 400 entlang der Statoroberfläche 301 verfahrbar.

Unterhalb der Statoroberfläche 303 kann eine weitere Anordnung von Statorleitern vorgesehen sein, in der die Statorleiter im Wesentlichen entlang der zweiten Richtung 509 ausgerichtet sind.

In dem Statormodulgehäuse 305 können ferner Elektronikmodule für den Antrieb und für die Steuerung des Läufers 400 angeordnet sein.

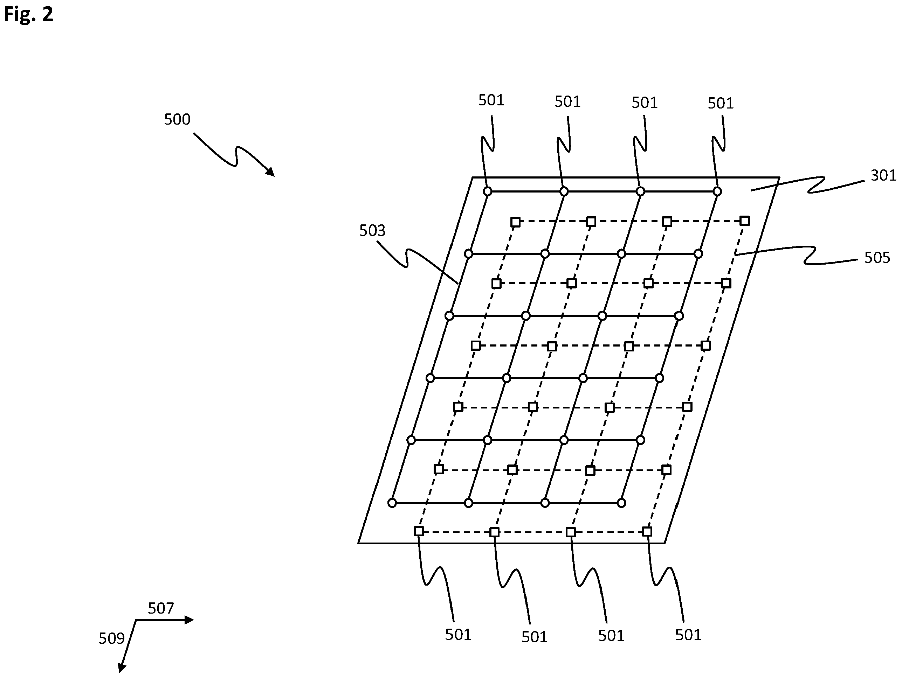

Fig. 2 zeigt eine perspektivische Ansicht eines Sensormoduls 500 zur Erfassung einer Position des Läufers 400 im Planarantriebssystem 200.

In der gezeigten Ausführungsform ist das Sensormodul 500 rechteckig angeordnet und weist eine zweidimensionale Anordnung von Magnetfeldsensoren 501 auf einem Träger 301 des Statormoduls 300 auf. Die Magnetfeldsensoren 501 sind auf dem Träger 301 innerhalb des Statormoduls 300 angeordnet.

In der gezeigten Ausführungsform weist die zweidimensionale Anordnung der Magnetfeldsensoren 501 ein erstes periodisches Gitter 503 von Magnetfeldsensoren 501 und ein zweites periodisches Gitter 505 von Magnetfeldsensoren 501 auf.

Die in Fig. 2 dargestellte Anordnung der Magnetfeldsensoren 501 dient ausschließlich zur Illustration und kann von der in Fig. 2 dargestellten Anordnung abweichen.

Die Magnetfeldsensoren 501 können als Hall-Sensoren ausgebildet sein. Insbesondere können die Magnetfeldsensoren 501 als 2D- oder 3D-Hall-Sensoren ausgebildet sein, wobei 3D-Hall-Sensoren die Magnetfeldkomponenten in drei linear unabhängigen Raumrichtungen messen. Diese Raumrichtungen können insbesondere die erste Richtung 507 und die zweite Richtung 509 sowie eine dritte Richtung senkrecht zur ersten Richtung 507 und zur zweiten Richtung 509 umfassen.

Über die Magnetfeldsensoren 501, die jeweils eingerichtet sind, für vordefinierte Raumbereiche Magnetfeldbestimmungen durchzuführen, ist somit ein Läufermagnetfeld eines auf dem Statormodul 300 positionierten Läufers 400 präzise detektierbar. Über eine präzise Detektion eines Läufermagnetfelds eines auf dem Statormodul 300 positionierten beziehungsweise sich bewegenden Läufers ist eine Positionsbestimmung des Läufers 400 relativ zum Statormodul 300 ermöglicht, was wiederum eine präzise Steuerung des Läufers 400 erlaubt.

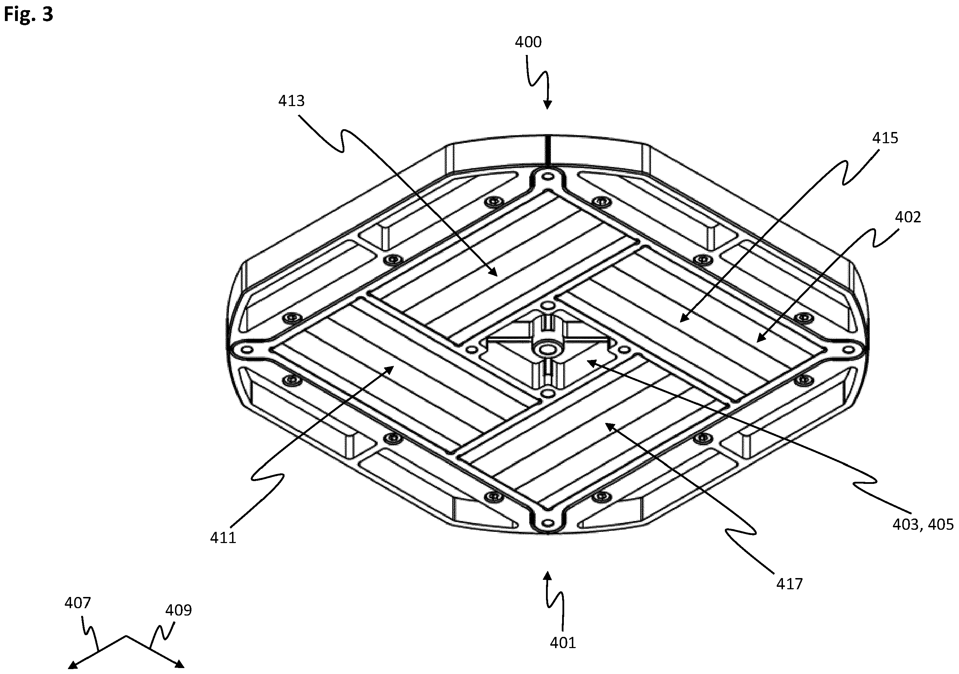

Fig. 3 zeigt den Läufer 400 des Planarantriebssystems 200 in einer Ansicht von unten auf eine Unterseite des Läufers 400. Im Betrieb des Planarantriebssystems 200 ist die Unterseite des Läufers 400 der Statoroberfläche 303 des Statormoduls 300 zugewandt angeordnet. Der Läufer 400 weist an der Unterseite eine Magnetanordnung 401 mit einer ersten Magneteinheit 411, einer zweiten Magneteinheit 413, einer dritten Magneteinheit 415 und einer vierten Magneteinheit 417 auf. Die Magnetanordnung 401 ist ausgebildet das Läufermagnetfeld des Läufers 400 zu generieren, über das eine magnetische Kopplung mit den Statormagnetfeldern des Statormoduls 300 erreichbar ist. Über die magnetische Kopplung kann eine Steuerung ein Verfahren des Läufers 400 relativ zum Statormodul 300 erreicht werden.

Im Betrieb ist die Unterseite des Läufers 400 mit der Magnetanordnung 401 im Wesentlichen parallel zu der Statoroberfläche 303 orientiert und der Statoroberfläche 303 zugewandt angeordnet.

In der gezeigten Ausführungsform sind die erste Magneteinheit 411 und die dritte Magneteinheit 415 jeweils parallel zu einer zweiten Läuferrichtung 409 orientiert während die zweite Magneteinheit 413 und die vierte Magneteinheit 417 entlang einer ersten Läuferrichtung 407 orientiert sind. Die erste und dritte Magneteinheit 411, 415 dienen im Betrieb einem Antrieb des Läufers 400 in der ersten Läuferrichtung 407, und die zweite und vierte Magneteinheit 413, 417 dient im Betrieb einem Antrieb des Läufers 400 in der zweiten Läuferrichtung 409. Darüber hinaus dienen alle Magneteinheiten 413, 417 einem Antrieb in eine zur Statoroberfläche 303 senkrechte Richtung.

In der Mitte der Magnetanordnung 401 kann der Läufer 400 eine Freifläche 403 aufweisen, die nicht von Magneten der Magnetanordnung 401 bedeckt wird. Im Bereich der Freifläche 403 kann der Läufer 400 eine Befestigungsstruktur 405 aufweisen.

Fig. 4 zeigt ein Flussdiagramm des Verfahrens 100 zum Steuern eines Planarantriebssystems 200 gemäß einer Ausführungsform.

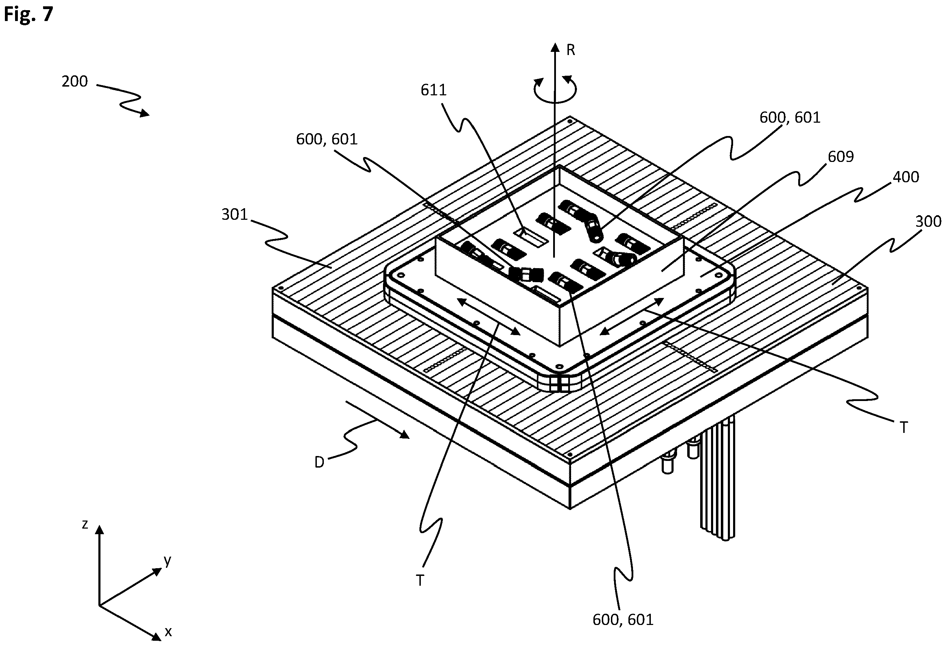

Das in Fig. 4 bis 6 gezeigte Verfahren 100 wird unter Berücksichtigung der Beschreibung der Fig. 7 bis 11 vorgenommen.

Das Verfahren 100 zum Steuern eines Planarantriebssystems 200 gemäß der Ausführungsform in Fig. 4 ist auf ein Planarantriebssystem 200 nach einem der Fig. 1 bis 3 anwendbar, wobei das Planarantriebssystem 200 wenigstens eine Steuereinheit 201, ein Statormodul 300 mit einer Statoroberfläche 303 und einen auf der Statoroberfläche 303 positionierbaren und verfahrbaren Läufer 400 umfasst. Ferner ist zwischen einem Läufermagnetfeld des Läufers 400 und Statormagnetfeldern, die durch das Statormodul 300 generierbar sind, eine magnetische Kopplung erzielbar, über die durch eine gezielte Ansteuerung der Statormagnetfelder eine Bewegung des Läufers 400 relativ zum Statormodul ermöglicht ist.

Zum Steuern des Läufers 400 gemäß dem Verfahren 100 wird zunächst in einem Positionierschritt 101 ein Objekt 600 auf dem Läufer 400 in einem ersten Anordnungszustand des Objekts 600 positioniert. Das Positionieren kann insbesondere ein Beladen des Läufers 400 mit dem Objekt 600 umfassen. Ein Objekt 600 kann hierbei beispielsweise einen dreidimensionalen Gegenstand beziehungsweise eine Mehrzahl von dreidimensionalen Gegenständen umfassen. Dies können beispielsweise Fertigungsprodukte oder -Teilprodukte verschiedener Größe sein, die in einem Fertigungsprozess gefertigt oder weiterverarbeitet werden. Die Fertigungsprodukte können unterschiedlicher Form, Größe, Masse und aus verschiedensten Materialien gefertigt sein. Ein erster Anordnungszustand kann für ein derartiges Objekt eine Position beziehungsweise Orientierung relativ zum Läufer umfassen. Alternativ kann ein Anordnungszustand eine Ordnung oder Sortierung einzelner Gegenstände innerhalb einer Mehrzahl von dreidimensionalen Gegenständen des zu transportierenden Objekts 600 sein.

Alternativ kann ein Objekt 600 ein Schüttgut umfassen, das in einen Behälter gefüllt sein kann. In einem solchen Fall kann ein Anordnungszustand beispielsweise eine Fülldichte, mit der das Schüttgut in den Behälter gefüllt ist, oder eine ungleichmäßige Befüllung des Behälters mit dem Schüttgut, bei dem einzelne Bereiche des Behälters ungleichmäßig befüllt sind, beschreiben.

Alternativ kann ein Objekt 600 ein Schüttgut mit mindestens zwei verschiedenen Bestandteilen umfassen. In einem solchen Fall kann ein Anordnungszustand einen Mischungsgrad der zwei Bestandteile beschreiben.

Alternativ hierzu kann ein Objekt 600 auch ein Fluid mit mehreren Bestandteilen umfassen, das in einen Behälter gefüllt ist. Ein Anordnungszustand kann in einem solchen Fall beispielsweise eine Durchmischung der mehreren Bestandteile beziehungsweise eine Lösung eines Festkörperbestandteils des Fluids beschreiben.

Ein Objekt 600 kann somit einen beliebigen Gegenstand oder eine Mehrzahl von Gegenständen umfassen, der oder die beispielsweise in einem Fertigungs- oder Verarbeitungsprozess gefertigt, zur Herstellung eines weiteren Produkts dient oder in einem Verarbeitungsprozess weiterverarbeitet wird und das in verschiedensten Gestalten, Formen, Größen vorkommen kann. Alternativ kann ein Objekt 600 auch in einem Kommissionierprozess transportiert werden, ohne dass eine Verarbeitung oder Fertigung durchgeführt wird.

Der erste Anordnungszustand des Objekts 600 kann hierbei in beliebiger beziehungsweise zufälliger Anordnungszustand sein, in dem das Objekt 600 auf dem Läufer 400 positioniert ist. Der erste Anordnungszustand kann alternativ durch eine charakteristische Ausgestaltung einer zum Positionieren des zu transportierenden Objekts 600 verwendeten Beladevorrichtung definiert sein, die eingerichtet ist, das Objekt 600 in einem bestimmten Anordnungszustand auf dem Läufer zu positionieren.

Nach Positionierung des Objekts 600 auf dem Läufer 400 wird in einem Anordnungsschritt 103 durch Ausführen einer Beschleunigungsbewegung des Läufers 400 das auf dem Läufer 400 im ersten Anordnungszustand angeordnete Objekt 600 in einen zweiten Anordnungszustand gebracht. Die Beschleunigungsbewegung kann hierbei durch ein entsprechendes Ansteuern des Statormoduls 300 und ein entsprechendes Modifizieren der Statormagnetfelder bewirkt werden. Eine Beschleunigungsbewegung kann wenigstens eine ruckartige Beschleunigung in Form eines Beschleunigungspulses in eine Beschleunigungsrichtung des Läufers 400 umfassen. Der Beschleunigungspuls kann eine definierte Beschleunigungsstärke und eine definierte Beschleunigungsdauer in Form einer Pulsbreite aufweisen. Ein Bewegungsmuster kann hierbei eine beschleunigte Translationsbewegung des Läufers 400 in eine Translationsbeschleunigungsrichtung und/oder eine beschleunigte Rotationsbewegung des Läufers 400 um eine Rotationsachse umfassen.

Gemäß einer Ausführungsform kann ein Bewegungsmuster ein oszillatorisches Bewegungsmuster sein, das vorsieht, den Läufer 400 in einer oszillatorischen Bewegung ruckartig hin und herzubewegen. Dies kann beispielsweise in einer oszillatorischen Translationsbewegung sein, bei der der Läufer 400 abwechselnd in entgegengesetzt gerichteten Translationsbewegungen relativ zum Statormodul 300 verschoben wird. Alternativ hierzu kann das oszillatorische Bewegungsmuster eine oszillatorische Rotationsbewegung um eine Rotationsachse umfassen, wobei das oszillatorische Bewegungsmuster vorsieht, den Läufer 400 abwechselnd in entgegengesetzte Rotationsrichtungen um die Rotationsachse zu verdrehen. Durch das oszillatorische Bewegungsmuster kann somit eine Rüttelbewegung des Läufers 400 generiert werden, bei der der Läufer 400 über ein ruckartiges oszillatorisches Verschieben beziehungsweise Rotieren eine Rüttelfunktion auf das auf dem Läufer 400 positionierte Objekt 600 ausübt.

Das oszillatorische Bewegungsmuster kann eine beliebig wählbare Anzahl zeitlich nacheinander auszuführender Beschleunigungspulse aufweisen. Die Beschleunigungspulse können identische oder unterschiedliche Beschleunigungsstärken aufweisen. Das Beschleunigungsmuster kann ferner eine wählbare Ausführungsdauer umfassen. Die Beschleunigungspulse können unmittelbar aneinander anschließend ausgeführt werden. Alternativ können die Beschleunigungspulse mit einer Pause zwischen aufeinanderfolgenden Beschleunigungspulsen ausgeführt werden. Beschleunigungspulse können eine identische Beschleunigungsrichtung oder entgegengesetzt gerichtete Beschleunigungsrichtungen aufweisen. Bei entgegengesetzt gerichteten Beschleunigungsbewegungen können direkt aufeinander folgende Beschleunigungspulse jeweils entgegengesetzt gerichtete Beschleunigungsrichtungen aufweisen. Alternativ kann eine beliebig wählbare Anzahl von Beschleunigungspulsen mit identischer Beschleunigungsrichtung von einer Anzahl von Beschleunigungspulsen mit identischer aber entgegengesetzt gerichteter Beschleunigungsrichtung gefolgt ausgeführt werden.

Einzelne Beschleunigungspulse können identische Beschleunigungsstärken und/oder Beschleunigungsdauer aufweisen. Alternativ können die Beschleunigungspulse eines Bewegungsmusters unterschiedliche Beschleunigungsstärken und/oder Beschleunigungsdauer aufweisen.

Die Translationsbeschleunigungsrichtung beziehungsweise die Rotationsachse der beschleunigten Translations- bzw. Rotationsbewegung kann hierbei in eine beliebig wählbare Raumrichtung orientiert sein. Die Rotationsachse kann beispielsweise senkrecht zur Oberfläche des Läufers 400 orientiert sein, sodass eine Rotationsbewegung den Läufer 400 weiterhin parallel zur Statoroberfläche orientiert lässt. Alternativ kann die Rotationsachse parallel zur Oberfläche des Läufers 400 angeordnet sein, wodurch eine Kippbewegung des Läufers 400 erzeugt werden kann.

Alternativ kann das Bewegungsmuster eine Vielzahl einander überlagernder beschleunigter Translationsbewegungen in unterschiedliche Translationsbeschleunigungsrichtungen und beschleunigter Rotationsbewegungen um unterschiedliche Rotationsachsen umfassen. Hierdurch kann eine komplexe beschleunigte Bewegung des Läufers 400 erzeugt werden, die eine Superposition einzelner beschleunigter Translations- und/oder Rotationsbewegungen umfasst.

Die Beschleunigungsbewegung eines beliebigen Bewegungsmusters kann hierbei eine beliebig wählbare Beschleunigungsstärke aufweisen, die einen Wert der durch die Beschleunigung verursachten Geschwindigkeitsänderung der Bewegung des Läufers 400 beschreibt. Bei einem oszillatorischen Bewegungsmuster kann die oszillatorische Bewegung des Läufers 400 mit einer beliebigen Frequenz generiert werden. Die Frequenz des Beschleunigungsmusters ergibt sich hierbei durch die zeitliche Abfolge der Mehrzahl von zeitlich nacheinander ausgeführten Beschleunigungspulsen. Da die oszillatorische Bewegung des Läufers 400 durch ein entsprechendes Ansteuern der Statormagnetfelder des Statormoduls 300 erfolgt und dadurch, dass der Läufer 400 reibungslos über das Statormodul 300 bewegt werden kann, ist die oszillatorische Bewegung des Läufers 400 durch keine Resonanzfrequenz beschränkt, sodass bei der Rüttelbewegung des Läufers 400 durch das oszillatorische Bewegungsmuster der Beschleunigungsbewegung eine Rüttelfunktion mit einer beliebig wählbaren Frequenz generiert werden kann.

Die Frequenz des Bewegungsmusters ist insbesondere stufenlos wenigstens zwischen 0-200 Hz einstellbar. Eine Beschleunigungsstärke der Beschleunigungspulse kann ebenfalls stufenlos zwischen 0 und 20m/sek² variiert werden. Eine Ausführungsdauer eines Bewegungsmusters, insbesondere eines oszillatorischen Bewegungsmusters, kann zwischen wenigen Sekunden bis zu mehreren Tagen betragen.

Je nach Art des auf dem Läufer 400 positionierten Objekts 600 kann eine Beschleunigungsbewegung gemäß einem entsprechend angepassten Bewegungsmuster generiert werden. Hierbei kann eine Anpassung der Beschleunigungsbewegung, insbesondere der Translationsbeschleunigungsrichtung und/oder Ausrichtung der Rotationsachse und/oder der Anzahl von aufeinanderfolgenden Beschleunigungspulsen und/oder der Frequenz und/oder der Beschleunigungsstärke der Beschleunigungspulse und/oder der Beschleunigungsdauer der Beschleunigungspulse und/oder der Ausführungsdauer des Bewegungsmusters an Eigenschaften des Objekts 600, beispielsweise der jeweilige Masse oder Form oder Gestalt (Festkörper, Fluid, Schüttgut) des Objekts 600, angepasst werden. Durch Ausführen der Beschleunigungsbewegung gemäß dem definierten Bewegungsmuster wird das auf dem Läufer 400 angeordnete Objekt 600 in einen zweiten Anordnungszustand gebracht.

Ein zweiter Anordnungszustand des Objekts 600 beschreibt hierbei einen gewünschten Anordnungszustand des Objekts 600, der gezielt durch Ausführen der Beschleunigungsbewegung des Läufers 400 herbeigeführt wird. Der zweite Anordnungszustand unterscheidet sich je nach Art des Objekts 600 in wenigstens einem Merkmal vom ersten Anordnungszustand.

In Abhängigkeit der Art des jeweiligen Objekts können hierdurch verschiedene Zustände beziehungsweise Anordnungen des Objekts 600 auf dem Läufer 400 beschrieben sein. Für ein Objekt, das als ein dreidimensionales Objekt ausgestaltet ist, kann der Anordnungszustand beispielsweise eine Positionierung oder eine Orientierung des Objekts 600 relativ zum Läufer 400 sein. Der erste und zweite Anordnungszustand unterscheiden sich in diesem Fall durch die Positionierung oder Orientierung des Objekts 600 relativ zum Läufer 400.

Aufgrund der Trägheit des unbefestigt auf dem Läufer 400 angeordneten Objekts 600 kann durch Ausführung der Beschleunigungsbewegung somit die Position des Objekts 600 auf dem Läufer 400 beziehungsweise dessen Orientierung zum Läufer 400 geändert werden, indem der ruckartig beschleunigten Bewegung des Läufers 400 geschuldet das zu transportierende Objekt 600 zu einer Bewegung relativ zum Läufer 400 angetrieben wird. Beispielsweise kann das Objekt 600 durch die ruckartig beschleunigte Bewegung des Läufers 400 eine Translationsbewegung, Kippbewegung oder Drehbewegung oder eine Kombination dieser Bewegungen relativ zum Läufer 400 ausführen. Bei einer Beschleunigungsbewegung gemäß einem oszillatorischen Bewegungsmuster kann das zu transportierende Objekt 600 bei jedem Beschleunigungspuls der oszillatorischen Rüttelbewegung des Läufers 400 eine entsprechende Translationsbewegung, Kippbewegung oder Drehbewegung oder eine Kombination dieser Bewegungen relativ zum Läufer 400 ausführen.

Alternativ kann das Objekt als eine Mehrzahl von dreidimensionalen Objekten beziehungsweise Gegenständen ausgebildet sein. Ein Anordnungszustand kann hierbei eine Ordnung der einzelnen Gegenstände zueinander sein und der erste und zweite Anordnungszustand können sich im Ordnungsgrad der Gegenstände des Objekts 600 unterscheiden. Durch Ausführen der Beschleunigungsbewegung, beispielsweise gemäß einem oszillatorischen Bewegungsmuster, und durch Ausführen einer entsprechenden Rüttelbewegung kann die Ordnung der Mehrzahl von Gegenständen untereinander verändert werden, indem jeder der Gegenstände die oben beschriebenen Translationsbewegungen, Kippbewegungen, Rollbewegungen oder Drehbewegungen oder eine Kombination dieser Bewegungen relativ zum Läufer 400 ausführt.

Für ein Objekt, das als ein Schüttgut innerhalb eines entsprechenden Behälters ausgebildet ist, kann ein Anordnungszustand beispielsweise ein Verdichtungsgrad sein, mit dem das Schüttgut in dem jeweiligen Behälter angeordnet ist. Der erste und zweite Anordnungszustand können sich dabei in dem Verdichtungsgrad des Schüttguts unterscheiden. Durch Ausführen der Beschleunigungsbewegung kann somit das im Behälter angeordnete Schüttgut verdichtet oder aufgelockert werden. Alternativ kann der Anordnungszustand ein Mischungsgrad beziehungsweise Entmischungsgrad einzelner Bestandteile des Schüttguts sein, und über Ausführen einer entsprechenden Beschleunigungsbewegung beispielsweise gemäß einem oszillatorischen Bewegungsmuster kann somit eine Vermischung der verschiedenen Bestandteile beziehungsweise eine Entmischung der Bestandteile erreicht werden.

Alternativ kann das Objekt 600 als ein Fluid mit beispielsweise wenigstens zwei Bestandteilen sein. Ein Anordnungszustand kann hierbei eine Vermischungs-/ Entmischungsgrad der wenigstens zwei Bestandteile oder ein Lösungs-/Abscheidungsgrad eines Festkörperbestandteils des Fluids sein. Die ersten und zweiten Anordnungszustände können sich demnach im Vermischungs-/ Entmischungsgrad oder im Lösungs-/Abscheidungsgrad der Bestandteile unterscheiden.

Gemäß einer Ausführungsform umfasst das Bewegungsmuster ferner eine Bremsbewegung. Die Bremsbewegung kann hierbei eine der Beschleunigungsrichtung des Beschleunigungspulses des Bewegungsmusters entgegengesetzt gerichtete Beschleunigungsrichtung aufweisen. Die Bremsbewegung kann dabei eine geringere Beschleunigungsstärke und/oder eine größere Beschleunigungsdauer und/oder eine geringere zeitliche Beschleunigungsänderung aufweisen als der Beschleunigungspuls. Die Bremsbewegung führt somit zu einem langsamen Abbremsen der durch den Beschleunigungspuls oder die Beschleunigungspulse des Bewegungsmusters hervorgerufenen Bewegung des Läufers 400. Führt der Beschleunigungspuls oder führen die Beschleunigungspulse zu einer ruckartigen Bewegung des Läufer 400 mit einer starken Geschwindigkeitsänderung so führt die Bremsbewegung stattdessen zu einer langsamen Geschwindigkeitsabnahme, sodass die Beschleunigungsbewegung des Läufers 400 mit allmählich verringerter Geschwindigkeit letztendlich zum Erliegen kommt. Durch das allmähliche Abbremsen der Beschleunigungsbewegung kann das Objekt 600 auf dem Läufer 400 in dem angestrebten zweiten Anordnungszustand positioniert werden. Durch das allmähliche Abbremsen der Beschleunigungsbewegung wird hingegen keine weitere Änderung des Anordnungszustands des Objekts 600 auf dem Läufer 400 bewirkt, sondern der durch zuvor ausgeführte Beschleunigungsbewegung des Läufers 400 erzielte zweite Anordnungszustand wird beibehalten.

Die Bremsbewegung kann hierbei in Bezug auf die Beschleunigungsrichtung und/oder Beschleunigungsstärke und/oder Beschleunigungsdauer derart eingerichtet sein, dass der Läufer durch die Bremsbewegung in eine Ausgangsposition zurückbewegt wird, in der der Läufer vor Beginn der Beschleunigungsbewegung positioniert war.

Fig. 5 zeigt ein weiteres Flussdiagramm des Verfahrens 100 zum Steuern eines Planarantriebssystems 200 gemäß einer weiteren Ausführungsform.

Die Ausführungsform des Verfahrens 100 in Fig. 5 basiert auf der Ausführungsform des Verfahrens 100 in Fig. 4 und umfasst alle dort beschriebenen Verfahrensschritte. Sofern diese in der Ausführungsform in Fig. 5 unverändert bleiben, wird von einer erneuten detaillierten Beschreibung abgesehen.

Abweichend zur Ausführungsform in Fig. 4 umfasst das Verfahren 100 in der Ausführungsform in Fig. 5 einen Transportschritt 105.

Nach Positionierung des Objekts 600 auf dem Läufer 400 wird in einem Transportschritt 105 der Läufer zwischen einer ersten Position und einer zweiten Position relativ zum Statormodul 300 verfahren. Die erste Position kann hierbei beispielsweise eine Beladestation sein, in der das zu transportierende Objekt 600 in dem ersten Anordnungszustand auf dem Läufer 400 positioniert wird. Eine zweite Position kann beispielsweise eine Entladeposition sein, in der das zu transportierende Objekt 600 vom Läufer 400 entladen wird. Alternativ kann die zweite Position eine Verarbeitungsposition sein, in der das Objekt 600 auf dem Läufer 400 positioniert durch entsprechende Verarbeitungsvorrichtung an der Verarbeitungsposition verarbeitet wird. Das potentielle Entladen oder das potentielle Verarbeiten des Objekts an der Entladeposition oder der Verarbeitungsposition kann eine vorbestimmte Ausrichtung des Objekts 600 voraussetzen. Zum Entladen oder Verarbeiten kann das Objekt 600 somit durch Ausführen der Beschleunigungsbewegung im Anordnungsschritt 103 in die vorbestimmte Ausrichtung, sprich den angestrebten zweiten Anordnungszustand gebracht werden.

Das Anordnen des Objekts 600 in den erstrebten zweiten Anordnungszustand durch Ausführen des Beschleunigungsbewegung gemäß dem jeweils passenden Bewegungsmuster im Anordnungsschritt 103 kann zeitgleich zum Verfahren des Läufer 400 aus der ersten in die zweite Position erfolgen. Alternativ kann das Ausführen der Beschleunigungsbewegung und das damit verbunden Anordnen des Objekts 600 im zweiten Anordnungszustand zeitlich vor oder nach dem Verfahren des Läufers 400 zwischen den ersten und zweiten Positionen vorgenommen werden.

Fig. 6 zeigt ein weiteres Flussdiagramm des Verfahrens 100 zum Steuern eines Planarantriebssystems 200 gemäß einer weiteren Ausführungsform.

Die Ausführungsform des Verfahrens 100 in Fig. 6 basiert auf der Ausführungsform des Verfahrens 100 in Fig. 5 und umfasst alle dort beschriebenen Verfahrensschritte. Sofern diese in der Ausführungsform in Fig. 6 unverändert bleiben, wird von einer erneuten detaillierten Beschreibung abgesehen.

In der Ausführungsform in Fig. 6 umfasst das Verfahren 100 einen Bestimmungsschritt 109, in dem eine Art des Objekts 600, ein erster Anordnungszustand und ein zu erzielender zweiter Anordnungszustand bestimmt beziehungsweise ermittelt werden. Die Art des Objekts kann hierbei eine Größe, eine Gestalt, eine Masse, eine Form, eine Schüttguteigenschaft, eine Flüssigkeitseigenschaft, ein Durchmischungsgrad oder einen Lösungsgrad umfassen. In Abhängigkeit der Art des Objekts kann der erste Anordnungszustand beziehungsweise der zweite Anordnungszustand eine Positionierung und/oder Orientierung des Objekts 600 auf dem Läufer 400 sein.

Insbesondere für den Fall, dass das Objekt als ein dreidimensionales Objekt beziehungsweise eine Mehrzahl von dreidimensionalen Objekten ausgebildet ist, kann der Anordnungszustand durch die Position beziehungsweise Orientierung des Objekts zum Läufer 400 definiert sein.

Bei einer Mehrzahl von Objekten kann der Anordnungszustand ferner eine Ordnung der einzelnen Objekte zueinander umfassen. Für den Fall, dass das Objekt 600 als ein Schüttgut beziehungsweise ein Fluid ausgestaltet ist, kann der Anordnungszustand eine Verdichtung des Schüttguts innerhalb eines Behälters sein.

Bei einem Schüttgut beziehungsweise einem Fluid bestehend aus mehreren Bestandteilen, kann der Anordnungszustand eine Durchmischung beziehungsweise eine Entmischung beziehungsweise eine Lösung eines Festkörperbestandteils innerhalb eines Fluids sein. Durch Änderung der Anordnungszustände kann somit der Verdichtungsgrad eines in einem Behälter angeordneten Schüttguts verändert werden. Alternativ kann eine Durchmischung von mehreren Bestandteilen innerhalb eines Schüttguts beziehungsweise Fluids verändert werden. Darüber hinaus kann durch Anwenden der Beschleunigungsbewegung ein Festkörper innerhalb eines Fluids gelöst werden.

Nach Bestimmung der Art des Objekts 600 beziehungsweise der ersten und zweiten Anordnungszustände kann in einem Bewegungsmusterauswahlschritt 111 ein entsprechendes Bewegungsmuster ausgewählt werden, das eingerichtet ist, ein Objekt der jeweils bestimmten Art aus einem entsprechenden ersten Anordnungszustand in einen zweiten Anordnungszustand zu bringen. Die jeweils ausgewählten Bewegungsmuster können in einer Liste/Datenbank bereits vorgegebener Bewegungsmuster gespeichert sein, sodass eine Beschleunigungsbewegung gemäß einem bereits vorbestimmten Bewegungsmuster durchgeführt werden kann. Die in der Liste/Datenbank gespeicherten Bewegungsmuster sind hierbei darauf eingerichtet, ein entsprechendes Objekt einer entsprechenden Art in den jeweils angestrebten Anordnungszustand zu bringen.

Der Bestimmungsschritt 109 wie auch der Auswahlschritt 111 können händisch durch einen Nutzer des Planarantriebssystems 200 durchgeführt werden, indem dieser der Steuereinheit des Planarantriebssystems 200 die jeweilige Art des Objekts 600 beziehungsweise die entsprechenden Anordnungszustände mitteilt und von der Steuereinheit 201 automatisch ein entsprechendes Bewegungsmuster im Auswahlschritt 111 ausgewählt wird. Alternativ kann der Nutzer direkt ein entsprechendes Bewegungsmuster im Auswahlschritt 111 auswählen.

Alternativ können sowohl der Bestimmungsschritt 109 wie auch der Auswahlschritt 111 automatisch über die Steuereinheit 201 des Planarantriebssystems durchgeführt werden. Hierzu kann im Bestimmungsschritt 109 eine Objekterkennung des auf dem Läufer 400 angeordneten Objekts 600 und/oder eine Klassifizierung des erkannten Objekts 600 gemäß einer entsprechenden Objektklassifizierung durchgeführt werden, beispielsweise mittels eines entsprechenden Kamerasystems zum Erstellen einer Bild- und/oder Videoaufnahme des auf dem Läufer 400 angeordneten Objekts 600 und mittels entsprechend trainierter neuronaler Netze, die eingerichtet sind auf Basis der Bild- und/oder Videoaufnahme eine Objekterkennung des Objekts 600 durchzuführen und das erkannten Objekt 600 einer entsprechenden Objektklasse zuzuordnen. Auf Basis der Objekterkennung und/oder der Objektklassifizierung können darauffolgend automatisch geeignete Bewegungsmuster ausgewählt werden, die als für Objekte der entsprechenden Klasse als geeignet deklariert sind. Hierzu kann eine Mehrzahl vordefinierter Bewegungsmuster für Objekte einer Mehrzahl verschiedener Objektklassen definiert und gegebenenfalls in einer entsprechenden Datenbank hinterlegt sein. Durch einen entsprechend geeigneten Algorithmus kann auf Basis der Objektklassifizierung des Objekts 600 ein geeignetes Bewegungsmuster aus der Datenbank ausgewählt und durch die Steuerung ausgewählt werden.

**Tabelle 1**

| **Art des Objekts** | **Erster Anordnungszustand** | **Zweiter Anordnungszustand** | **Art des Bewegungsmusters** | **Beschleunigungsbewegung** | **Anzahl der Pulse** | **Beschleunigungsstärke** |
|---|---|---|---|---|---|---|
| Fluid | Erster Mischzustand | Zweiter Mischzustand | oszillatorisch | Rotation | variabel | konstant |
| Schüttgut | Erste Fülldichte | Zweite Fülldichte | oszillatorisch | Translation | 100 | absteigend |
| Einzelnes Bauteil | Erste Ausrichtung | Zweite Ausrichtung | Einzelpuls | Rotation/Kippbewegung | Einzelpuls | variabel |
| Gruppe von Bauteilen | Erster Sortierzustand | Zweiter Sortierzustand | oszillatorisch | Translation + Rotation | 50 + 50 | alternierend |

In der gezeigten Tabelle sind Beispiele für unterschiedliche Objekte verschiedener Objektarten und hierzu gegebenenfalls gespeicherter vordefinierter Bewegungsmuster dargestellt, die geeignet sind, den Anordnungszustand des jeweiligen Objekts zu ändern.

Ein erstes Objekt ist beispielsweise als ein Fluid mit wenigstens zwei Bestandteilen gegeben, für das durch Anwendung des Verfahrens 100 eine Vermischung erreicht werden soll. In einem ersten Anordnungszustand befindet sich das Fluid in einem ersten Mischzustand der beiden Bestandteile, in dem beide Bestandteile beispielsweise vollständig entmischt sind. Der zweite Anordnungszustand stellt hierbei die gewünschte Vermischung der beiden Bestandteile dar, in dem beide Bestandteile beispielsweise vollständig vermischt sind. Die Vermischung soll hierbei durch Ausführung einer Beschleunigungsbewegung gemäß einem oszillatorischen Bewegungsmuster erreicht werden. Zum Vermischen der beiden Bestandteile umfasst die Beschleunigungsbewegung eine Rotationsbewegung um eine senkrecht zur Oberfläche des Läufers 400 orientierte Rotationsachse, sodass eine Rührfunktion des Fluids erreicht wird, das in einen Behälter gefüllt auf dem Läufer 400 angeordnet ist. Die Rührfunktion ergibt sich durch alternierende Hin- und Herrotieren des Läufers 400 und des auf dem Läufer angeordneten Behälters. Die Anzahl der Beschleunigungspulse des Bewegungsmusters kann variabel gestaltet werden, beispielsweise indem der Mischzustand verfolgt wird und das Bewegungsmuster solange ausgeführt wird, bis der gewünschte Mischzustand erreicht ist. Die einzelnen Beschleunigungspulse können hierbei die gleiche Beschleunigungsstärke aufweisen.

Ein zweites Objekt ist beispielsweise ein Schüttgut und über Ausführen des Verfahrens 100 soll eine Fülldichte des Schüttguts in einem dafür vorgesehenen Behälter erhöht werden. Hierzu kann wiederum eine oszillatorisches Bewegungsmuster mit einer Translationsbewegung genutzt werden, das eine Rüttelbewegung des Läufers 400 bewirkt, wodurch das Schüttgut im Behälter verdichtet wird. Zum Verdichten eines solchen Schüttguts kann beispielsweise aus Erfahrung vorangegangener Verdichtungsfunktionen ähnlicher Schüttgüter ergeben haben, dass eine Anzahl von 100 aufeinanderfolgenden Beschleunigungspulsen ausreichend für den erwünschten Verdichtungszustand ausreichend ist. Das Bewegungsmuster kann somit auf diese Anzahl beschränkt sein kann. Die einzelnen Beschleunigungspulse können beispielsweise unterschiedliche Beschleunigungsstärken aufweisen, die mit fortlaufenden Bewegungsmuster absteigend abnimmt.

Ein drittes Objekt kann beispielsweise ein einzelnes Bauteil sein, dass durch Ausführen des Verfahrens 100 in eine gewünschte Ausrichtung auf dem Läufer 400 gebracht werden soll. Das hierzu auszuführende Bewegungsmuster kann beispielsweise lediglich einen einzelnen Beschleunigungspuls umfassen und eine Rotationsbewegung um eine parallel zu einer Oberfläche des Läufers angeordnete Rotationsachse beschreiben, wodurch eine Kippbewegung des Läufers 400 erreicht wird, die das Bauteil in die gewünschte Ausrichtung bewegt. Die Beschleunigungsstärke des Beschleunigungspulses kann hierbei variabel gewählt werden und von der Beschaffenheit des Bauteils (Form, Masse usw.) abhängen.

Ein viertes Objekt 600 kann beispielsweise eine Mehrzahl von Bauteilen umfassen, die jeweils durch Ausführung des Verfahrens 100 in einen gewünschten Ordnungszustand gebracht werden sollen. Hierzu kann beispielsweise ein oszillatorisches Bewegungsmuster bestehend aus oszillatorischen Translations- und Rotationsbewegungen ausgeführt werden. Beispielsweise können nacheinander 50 Beschleunigungspulse der Translationsbewegung und 50 Beschleunigungspulse der Rotationsbewegung ausgeführt werden. Die Beschleunigungspulse können beispielsweise unterschiedliche Beschleunigungsstärken aufweisen, die abwechselnd ausgeführt werden.

Die in Tabelle 1 dargestellten Objekte und die zugeordnete Bewegungsmuster sind lediglich beispielhaft und stellen keine realen Anwendungen des Verfahrens 100 dar. Durch die gezeigten Beispiele soll der Zusammenhang zwischen der Art des Objekts, dem zu erreichenden Anordnungszustand und den dazu verwendbaren Bewegungsmustern illustriert werden. Die Bewegungsmuster können zusätzlich zu den gezeigten Merkmalen weitere Merkmale, wie Ausführungsdauer des Bewegungsmusters oder Beschleunigungsdauer der Beschleunigungspulse, umfassen.

Die jeweils ausgewählten Bewegungsmuster können individuell generiert werden. Alternativ können die Bewegungsmuster mit entsprechend vorbestimmten Eigenschaften in einer Liste/Datenbank möglicher Bewegungsmuster gespeichert sein, sodass für ein Objekt einer bestimmten Art und für entsprechende Anordnungszustände passende Bewegungsmuster ausgewählt und automatisch ausgeführt werden können, die sich beispielsweise in früheren Ausführungen als geeignet erwiesen haben, den gewünschten Anordnungszustand zu erreichen.

In der Ausführungsform in Fig. 6 umfasst der Anordnungsschritt 105 ferner einen ersten Detektionsschritt 113. Im ersten Detektionsschritt 113 wird das auf dem Läufer 400 angeordnete Objekt 600 während des Ausführens der Beschleunigungsbewegung des Läufers 400 überwacht und ein Anordnungszustand des Objekts 600 während Ausführung der Beschleunigungsbewegung wird detektiert.

Hierzu umfasst der Detektionsschritt 113 einen Kraftermittlungsschritt 119 und einen Überwachungsschritt 121.

Im Kraftermittlungsschritt 119 kann zur Überwachung des Objekts 600 eine Kraft ermittelt werden, die benötigt wird, den Läufer 400 in einem Schwebezustand oberhalb der Statoroberfläche 301 des Statormoduls 300 zu halten. Auf Basis der ermittelten magnetischen Kraft, die zum Aufrechterhalten des Schwebezustands benötigt wird, kann eine Positionierung beziehungsweise eine Orientierung des Objekts 600 auf dem Läufer 400 bestimmt werden. Die Bestimmung der benötigten magnetischen Kraft kann durch das Statormodul 300 beziehungsweise durch die Steuereinheit 201 des Planarantriebssystems 200 durchgeführt werden. Alternativ kann eine magnetische Kraft bestimmt werden, die benötigt wird, die Beschleunigungsbewegung des Läufers 400 durchzuführen. Auf Basis der ermittelten magnetischen Kraft, die zur Beschleunigungsbewegung des Läufers 400 inklusive des auf dem Läufer 400 angeordneten Objekts 600 benötigt wird, kann eine Positionierung beziehungsweise Orientierung des Objekts 600 auf dem Läufer 400 ermittelt werden.

Alternativ kann eine magnetische Kraft bestimmt werden, die zur Bewegung des Läufers 400 zwischen der ersten Position und der zweiten Position benötigt wird. Auf Basis der ermittelten magnetischen Kraft kann wiederum eine Positionierung beziehungsweise Orientierung des Objekts 600 auf dem Läufer 400 ermittelt werden.

Im Überwachungsschritt 121 kann zur Überwachung des Objekts 600 während der Ausführung der Beschleunigungsbewegung mittels einer Überwachungseinrichtung, die beispielsweise als eine optische Überwachungseinrichtung beziehungsweise eine akustische Überwachungseinrichtung oder eine elektromagnetische Überwachungseinrichtung ein Anordnungszustand des Objekts 600 ermittelt werden. Die optische Überwachungseinrichtung kann beispielsweise ein Kamerasystem sein, das eingerichtet ist, das Objekt 600 auf dem Läufer 400 einzusehen und somit einen Anordnungszustand während des Durchführens der Beschleunigungsbewegung zu ermitteln.

Ferner umfasst der Anordnungsschritt 105 einen Anpassungsschritt 115. Im Anpassungsschritt 115 kann auf Basis des im ersten Detektionsschritt 113 ermittelten Anordnungszustands des Objekts 600 das zur Ausführung der Beschleunigungsbewegung verwendete Bewegungsmuster und damit verbunden die Ausführung der Beschleunigungsbewegung angepasst werden. Wird im ersten Detektionsschritt 113 ermittelt, dass das Objekt 600 nicht im zweiten Anordnungszustand angeordnet ist und folglich die ausgeführte Beschleunigungsbewegung nicht ausreichend ist, das Objekt 600 in den angestrebten zweiten Anordnungszustand zu versetzen, so kann im Anpassungsschritt 115 eine Anpassung des verwendeten Bewegungsmusters durchgeführt werden. Zur Anpassung kann beispielsweise die Beschleunigungsstärke oder Beschleunigungsdauer der Beschleunigungspulse angepasst werden. Alternativ kann bei Verwendung eines oszillatorischen Bewegungsmusters die verwendete Frequenz angepasst werden. Darüber hinaus kann die Translationsbeschleunigungsrichtung beziehungsweise eine Rotationsachse im Falle einer beschleunigten Rotationsbewegung verändert werden. Alternativ kann das verwendete Bewegungsmuster mit einem weiteren Bewegungsmuster überlagert werden, indem eine Mehrzahl verschiedener beschleunigter Translationsbewegungen und/oder beschleunigter Rotationsbewegungen kombiniert werden. Alternativ kann anstatt der Anpassung des verwendeten Bewegungsmusters ein anderes Bewegungsmuster gewählt werden, das zur Anordnung des jeweiligen Objekts besser geeignet ist und gegebenenfalls mit vorbestimmten Eigenschaften in einer entsprechenden Datenbank gespeichert ist.

Die Anpassung des Bewegungsmusters im Anpassungsschritt 115 kann händisch durch einen Nutzer erfolgen, der den Verlauf der Änderung des Anordnungszustands des Objekts 600 aufgrund der durchgeführten Beschleunigungsbewegung verfolgt und entsprechend die Anpassung des Bewegungsmusters vornimmt.

Alternativ kann die Anpassung des Bewegungsmusters automatisch durchgeführt werden. Hierzu kann im ersten Detektionsschritt 113 eine automatische Erkennung des jeweils aktuellen Anordnungszustands des Objekts 600 durchgeführt werden. Hierzu kann beispielsweise eine entsprechend trainiertes neuronales Netz verwendet werden, dass entsprechend eingerichtet ist, auf Basis der im Kraftermittlungsschritt 119 ermittelten magnetischen Kraftdaten einen Anordnungszustand des Objekts 600 zu bestimmen. Alternativ kann ein weiteres trainiertes neuronales Netz verwendet werden, das eingerichtet ist auf Basis von im Überwachungsschritt 121 aufgenommener Bild- und/oder Videoaufnahmen des Kamerasystems mittels einer Objekterkennung den aktuellen Anordnungszustand zu erkennen und zu klassifizieren.

Auf Basis des bestimmten Anordnungszustands kann darauffolgend beispielsweise durch ein weiteres trainiertes neuronales Netz eine geeignete Anpassung des Anordnungszustands bestimmt werden. Hierzu kann beispielsweise durch das neuronale Netz oder einen anderen geeigneten Algorithmus aus einer Mehrzahl von vordefinierten und in einer entsprechenden Datenbank abgelegten Anpassungsstrategien eine geeignete Anpassungsstrategie auswählen und eine entsprechende Anpassung des Bewegungsmusters vornehmen. Die Anpassungsstrategien können hierbei unter Berücksichtigung der Art des Objekts 600 und des derzeitigen Anordnungszustands und des zu erreichenden zweiten Anordnungszustands ausgehend von dem verwendeten Bewegungsmuster Information enthalten, welche Komponenten des Bewegungsmusters, beispielsweise die Beschleunigungsrichtung, Beschleunigungsstärke, Anzahl der Beschleunigungspulse usw., anzupassen sind, um den angestrebten zweiten Anordnungszustand zu erreichen.

Alternativ kann durch das trainierte neuronale Netz oder einen geeigneten Algorithmus aus einer Mehrzahl von vordefinierten und in einer entsprechenden Datenbank hinterlegten Bewegungsmustern ein geeignetes Bewegungsmuster als Ersatz des ursprünglichen Bewegungsmusters auswählt werden.

Ferner umfasst der Anordnungsschritt 105 einen zweiten Detektionsschritt 117, in dem das Objekt 600 im zweiten Anordnungszustand detektiert wird. Nach Ausführung der Beschleunigungsbewegung und erfolgreichem Überführen des Objekts 600 in den angestrebten zweiten Anordnungszustand kann im zweiten Detektionsschritt 117 die Beschleunigungsbewegung beendet werden. Zur Detektion des Objekts 600 im zweiten Anordnungszustand im zweiten Detektionsschritt 117 kann wiederum eine Detektion gemäß dem Kraftermittlungsschritt 119 beziehungsweise dem Überwachungsschritt 121 mittels der Bestimmung der benötigten magnetischen Kraft zur Ausführung der oben genannten Bewegungen des Läufers 400 beziehungsweise mittels der optischen beziehungsweise akustischen Aufnahmen der jeweils ausgestalteten Überwachungseinrichtung. Alternativ können der Kraftermittlungsschritt 119 und der Überwachungsschritt 121 parallel ausgeführt werden.

Die Detektion des Objekts 600 im zweiten Anordnungszustand im zweiten Detektionsschritt 117 kann analog zum ersten Detektionsschritt 113 durch ein entsprechend trainiertes neuronales Netz ausgeführt werden, das eingerichtet ist entweder auf Basis der magnetischen Kraftdaten oder auf Basis der Bild- und/oder Videoaufnahmen des Kamerasystems eine Objekterkennung und eine entsprechende Klassifizierung durchzuführen, auf deren Basis eine Erkennung des zweiten Anordnungszustands ermöglicht ist.

Alternativ zur Überwachung des Fortschritts der Anordnung des Objekts 600 im zweiten Anordnungszustand im ersten Überwachungsschritt 113 und dem folgenden Anpassen des jeweiligen Bewegungsmusters kann beispielsweise bei Ausführung eines vordefinierten Bewegungsmusters, das beispielsweise für eine vordefinierte Ausführungsdauer ausgeführt wird, und das geeignet ist, durch vollständige Ausführung des Bewegungsmusters, das Objekt in den gewünschten zweiten Anordnungszustand zu bringen, direkt im zweiten Überwachungsschritt 117 das Objekt 600 im zweiten Anordnungszustand erkannt werden.

Die Überwachungseinrichtung und insbesondere das Kamerasystem kann jeweils am Läufer angebracht und über eine entsprechende Kommunikationseinrichtung, beispielsweise mittels einer Funkübertragungseinrichtung, mit der Steuereinheit 201 verbunden sein. Alternativ kann die Überwachungseinrichtung an einer externen Aufhängungsvorrichtung des Planarantriebssystems 200 angebracht sein. Die Überwachungsvorrichtung kann dabei derart platziert sein, dass das gesamte Statormodul 300 beziehungsweise die gesamte durch eine Mehrzahl von Statormodulen 300 gebildete Lauffläche des Planarantriebssystems 200 durch die Überwachungseinrichtung einsehbar ist. Alternativ kann eine Mehrzahl von Überwachungseinrichtungen an verschiedenen Positionen platziert sein, wobei jede Überwachungseinrichtung die gesamte Lauffläche oder einen Teil der Lauffläche einsehen kann. Alternativ kann die Überwachungseinrichtung als verfahrbare Überwachungseinrichtung ausgebildet sein, die eine Bewegung eines Läufers 400 folgen kann.

Beispielsweise kann die Überwachungseinrichtung als eine steuerbare Drohne ausgebildet sein.

Fig. 7 zeigt eine schematische Darstellung eines Läufers 400 auf einem Statormodul 300 gemäß einer Ausführungsform.

Fig. 7 zeigt eine Ausführungsform des Planarantriebssystems 200, das eingerichtet ist, das erfindungsgemäße Verfahren 100 auszuführen. In der Ausführungsform in Fig. 7 ist vergleichbar zu den Fig. 1 bis 3 lediglich ein Statormodul 300 und ein Läufer 400 des Planarantriebssystems 200 dargestellt. Alternativ hierzu kann das Planarantriebssystem 200 eine beliebige Anzahl von nebeneinander angeordneten Statormodulen 300 aufweisen. Hierdurch kann eine beliebige Fläche generiert werden, auf der eine beliebige Anzahl von Läufern 400 verfahrbar ist.

In der Ausführungsform in Fig. 7 ist auf dem Läufer 400 ein Objekt 600 angeordnet. In der gezeigten Ausführungsform umfasst das Objekt 600 eine Mehrzahl von Bauteilen 601. In Fig. 7 sind die Bauteile als beliebige Bauteile rein beispielhaft dargestellt. Alternativ kann ein Gegenstand neben einem Bauteil 601 ebenfalls ein beispielsweise in einem Nahrungsmittel- oder Futtermittelverarbeitungsprozess generiertes, produziertes oder verarbeitetes Nahrungsmittel beziehungsweise Futtermittel sein. Alternativ kann das Bauteil 601 ein beliebiger Gegenstand sein.

Ferner umfasst in der Ausführungsform in Fig. 7 der Läufer 400 eine Sortiervorrichtung 609 mit einer Mehrzahl von Aufnahmeöffnungen 611, die eingerichtet sind, die Bauteile 601 aufzunehmen.

Der Läufer 400 ist ferner eingerichtet, über die Ausführung einer entsprechenden Beschleunigungsbewegung eine Sortierfunktion auszuüben, mittels der die Bauteile 601 in die dafür vorgesehenen Aufnahmeöffnungen 611 der Sortiervorrichtung 609 eingeordnet werden können. Hierzu kann der Läufer 400 entlang verschiedener Translationsbeschleunigungsrichtungen T beschleunigt werden. Alternativ kann der Läufer 400 um eine Rotationsachse R in einer beschleunigten Rotationsbewegung beschleunigt werden.

In Fig. 7 ist eine Rotationsachse R dargestellt, die senkrecht zu einer Statoroberfläche 301 des Statormoduls 300 angeordnet ist. Der Läufer 400 kann somit in einer durch die Raumrichtungen x und y aufgespannten Ebene rotiert werden. Darüber hinaus sind in Fig. 7 zwei rechtwinklig angeordnete Translationsbeschleunigungsrichtungen T dargestellt, die jeweils in der durch die Raumrichtungen x und y aufgespannten Ebene angeordnet sind. Hierüber kann der Läufer somit sowohl in x-Richtung als auch in y-Richtung in einer entsprechenden Translationsbewegung beschleunigt werden. Der Läufer kann gemäß eines oszillatorischen Bewegungsmusters sowohl entlang der Translationsbeschleunigungsrichtungen als auch um die Rotationsachse R in einer oszillatorischen Translation beziehungsweise Rotation bewegt werden. Hierdurch kann eine Rüttelbewegung des Läufers 400 erzeugt werden, über die die Bauteile 601 innerhalb der Sortiervorrichtung 609 hin und herbewegt werden können, um somit eine Einordnung der Bauteile 601 in die dafür vorgesehenen Aufnahmeöffnungen 611 zu erreichen.

Das hierzu verwendete Bewegungsmuster kann hierbei aus einzelnen beschleunigten Translationsbewegungen oder aus einer oszillatorisch beschleunigten Translationsbewegung bestehen. Alternativ kann das ausgeführte Bewegungsmuster eine beschleunigte Rotationsbewegung um die Rotationsachse R beziehungsweise eine oszillatorisch beschleunigte Rotationsbewegung umfassen. Alternativ kann das Bewegungsmuster eine beliebige Überlagerung von beschleunigten Translationsbewegungen und beschleunigten Rotationsbewegungen umfassen. Beispielsweise kann durch eine Überlagerung der beiden Translationsbewegungen eine Translationsbewegung in einer beliebigen Richtung innerhalb der durch die Raumrichtungen x und y aufgespannten Ebene erreicht werden.

Die in Fig. 7 dargestellten Translationsbeschleunigungsrichtungen T beziehungsweise die dargestellte Rotationsachse R sind lediglich Beispiele von möglichen Translations- beziehungsweise Rotationsbewegungen. Alternativ können die Translationsbeschleunigungsrichtungen T beziehungsweise Rotationsachsen R in beliebige Raumrichtungen orientiert sein.

Durch Ausführen einer entsprechenden Beschleunigungsbewegung, gemäß den oben beschriebenen Verfahrensschritten, auf Basis eines entsprechend ausgewählten Bewegungsmusters kann der Läufer 400 in eine entsprechende Translations- beziehungsweise Rotationsbewegung versetzt werden. Hierdurch können die in der Sortiervorrichtung 609 angeordneten Bauteile 601 aufgrund ihrer Trägheit und der ruckartigen Beschleunigung des Läufers 400 in beliebige Raumrichtungen relativ zum Läufer 400 beschleunigt werden, sodass die Bauteile 601 sowohl ihre Positionierung als auch ihre Orientierung relativ zum Läufer 400 verändern. In der gezeigten Ausführungsform kann ein erster Anordnungszustand der Bauteile 601 beispielsweise den Fall beschreiben, dass die Bauteile 601 beliebig ungeordnet auf der Sortiervorrichtung 609 angeordnet sind. Ein angestrebter zweiter Anordnungszustand kann beispielsweise den Fall beschreiben, dass alle Bauteile 601 in den jeweils dafür vorgesehenen Aufnahmeöffnungen 611 angeordnet sind.

Durch die Ausführung der Beschleunigungsbewegung gemäß dem erfindungsgemäßen Verfahren 100 kann somit ein Sortiervorgang ausgeführt werden, indem die beliebig in der Sortiervorrichtung 609 angeordneten Bauteile 601 in die jeweils dafür vorgesehenen Aufnahmeöffnungen 611 eingeordnet werden. Der Läufer 400 kann hierzu in eine entsprechende beschleunigte Translation beziehungsweise Rotationsbewegung versetzt werden. Die Aufnahmeöffnungen können hierbei derart ausgestaltet sein, dass bereits einsortierte Bauteile 601 durch weitere Beschleunigungsbewegungen nicht aus der Aufnahmeöffnung 611 wieder heraus geschüttelt werden.

Gemäß den oben beschriebenen Verfahrensschritten kann während des Durchführens der Beschleunigungsbewegung der jeweilige Anordnungszustand der Bauteile 601 überwacht werden. Je nach Fortschritt der Einsortierung der einzelnen Bauteile 601 in die dafür vorgesehenen Aufnahmeöffnungen 611 kann die ausgeführte Beschleunigungsbewegung entsprechend angepasst werden, sodass ein Einsortieren der einzelnen Bauteile 601 in die dafür vorgesehenen Aufnahmeöffnungen 611 erfolgen kann. Hierzu können beispielsweise die Beschleunigungsstärke wie auch die Beschleunigungsrichtung wie auch bei einer oszillatorisch beschleunigten Bewegung die Frequenz der oszillatorischen Bewegung an die Eigenschaften der Bauteile 601 wie auch an den beobachteten Anordnungszustand angepasst werden. Je nach Größe beziehungsweise Masse der einzelnen Bauteile 601 kann die Beschleunigungsstärke der Beschleunigungsbewegung derart angepasst werden, dass eine optimale Beschleunigung der Bauteile innerhalb der Anordnungsvorrichtung 609 erreicht werden kann. Darüber hinaus kann eine gezielte Beschleunigung des Läufers in gezielte Beschleunigungsrichtungen ausgeführt werden, sodass beispielsweise einzelne Bauteile 601 in eine gewünschte Richtung innerhalb der Anordnungsvorrichtung 609 bewegt werden, um diese somit in entsprechende Aufnahmeöffnungen 611 zu bewegen.

Durch das Beschleunigen des Läufers 400 gemäß der Beschleunigungsbewegung des jeweiligen Beschleunigungsmusters und das damit verbundene Beschleunigen der Sortiervorrichtung 609, die fest am Läufer 400 befestigt sein kann, wird aufgrund der trägen Masse der einzelnen Bauteile 601 eine Relativbewegung jedes der nicht fixierten Bauteile 601 relativ zur Sortiervorrichtung 609 bewirkt. Hierdurch kann durch gezieltes Ansteuern der Beschleunigungsbewegung mit entsprechender Beschleunigungsstärke und gezielter Beschleunigungsrichtung eine gezielte Relativbewegung der Bauteile 601 beziehungsweise einzelner Bauteile 601 relativ zur Sortiervorrichtung 609 erreicht werden. Durch gezieltes Ansteuern des Läufers 400 mit entsprechender Beschleunigungsstärke und geeigneter Beschleunigungsrichtung können einzelne Bauteile 601 somit gezielt relativ zur Sortiervorrichtung 609 bewegt werden, sodass hierüber erreicht werden kann, dass einzelne Bauteile 601 in die dafür vorgesehenen Aufnahmeöffnungen 611 bewegt werden.

Durch Überwachen des Fortschritts des durch Ausführen der Beschleunigungsbewegung bewirkten Sortierprozesses, beispielsweise mittels der Überwachungseinrichtung (in Fig. 7 nicht dargestellt), kann somit die ausgeführte Beschleunigungsbewegung beziehungsweise das jeweilige Bewegungsmuster derart angepasst werden, dass ein Einsortieren der einzelnen Bauteile 601 in die dafür vorgesehenen Aufnahmeöffnungen 611 erreicht werden kann. Bei Erreichen des zweiten Anordnungszustands, der beispielsweise gegeben sein kann, wenn eine bestimmte Anzahl von Bauteilen 601 in die dafür vorgesehenen Aufnahmeöffnungen 611 einsortiert worden ist, kann die Beschleunigungsbewegung gemäß dem dafür vorgesehenen Bewegungsmuster beendet werden.

Der Läufer 400 kann darüber hinaus entlang einer Bewegungsrichtung D zwischen einzelnen Punkten auf dem Statormodul 300 beziehungsweise der durch die Mehrzahl von Statormodulen gebildeten Lauffläche des Planarantriebssystems 200 bewegt werden. Die Beschleunigungsbewegung gemäß dem definierten Bewegungsmuster zum Ausführen der Sortierfunktion kann zeitgleich zum Verfahren des Läufers 400 entlang der Bewegungsrichtung D durchgeführt werden. Alternativ können das Verfahren des Läufers 400 entlang der Bewegungsrichtung D und das Ausführen der Beschleunigungsbewegung zum Ausführen der Sortierfunktion zeitlich getrennt ausgeführt werden.

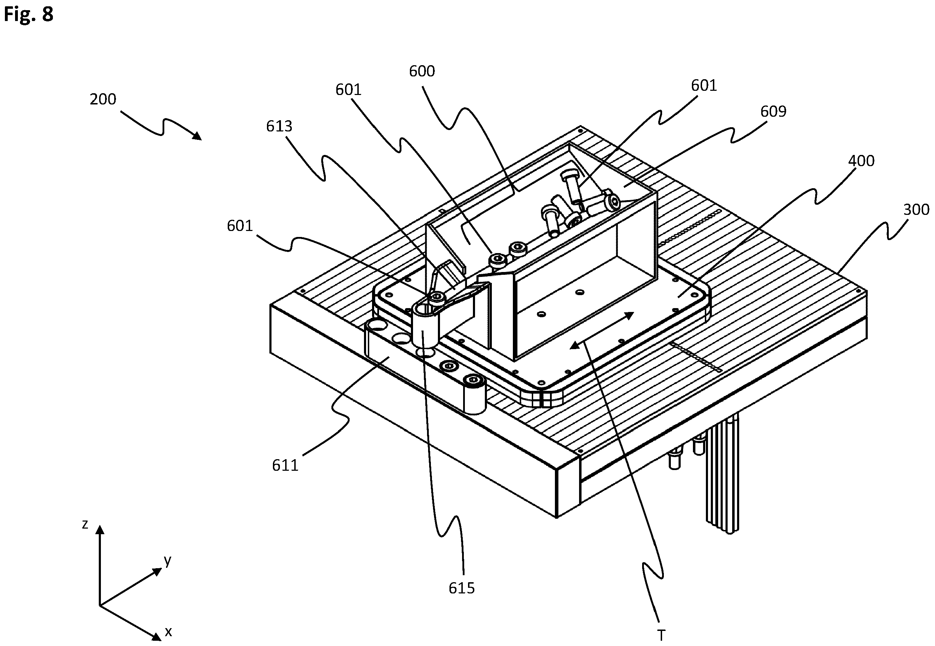

Fig. 8 zeigt eine weitere schematische Darstellung eines Läufers 400 auf einem Statormodul 300 gemäß einer weiteren Ausführungsform.

Fig. 8 zeigt eine weitere Ausführungsform des Planarantriebssystems 200. Analog zur Ausführungsform in Fig. 7 ist das Planarantriebssystem 200 eingerichtet, eine Sortierfunktion mittels Ausführens einer entsprechenden Beschleunigungsbewegung gemäß dem oben beschriebenen Verfahren 100 auszuführen. Hierzu ist auf dem Läufer 400 wiederum eine Sortiervorrichtung 609 ausgebildet, die eingerichtet ist, die Bauteile 601 in entsprechende Aufnahmeöffnungen 611 zu sortieren. In der Ausführungsform in Fig. 8 sind die Bauteile 601 als Nietenelemente ausgebildet. Dies ist jedoch analog zur Ausführungsform in Fig. 7 lediglich beispielhaft. Die Sortiervorrichtung 609 umfasst ferner eine Sortierrinne 613, die eingerichtet ist, die als Nietenelemente ausgebildeten Bauteile 601 aufzunehmen und unter Einwirkung der Beschleunigungsbewegung in Richtung eines Ausgabeelements 615 zu befördern. Über das Ausgabeelement 615 können die einzelnen Bauteile 601 in die dafür vorgesehenen Aufnahmeöffnungen 611 eingeführt werden. In der Ausführungsform in Fig. 8 sind die Aufnahmeöffnungen 611 am Statormodul 300 eingerichtet, sodass über das Einsortieren der Bauteile 601 in die Aufnahmeöffnungen 611 gleichzeitig ein Entladen der Bauteile 601 vom Läufer 400 bewirkt wird. Die Ausgestaltung der Aufnahmeöffnungen am Statormodul 300 ist lediglich beispielhafter Natur und dient ausschließlich zur Illustration des beschriebenen Sortier- beziehungsweise Entladeprozesses.

In der gezeigten Ausführungsform kann ein erster Anordnungszustand der Bauteile 601 beispielsweise den Fall beschreiben, dass die Bauteile 601 in zufällige Orientierung und Positionierung in der Sortiervorrichtung angeordnet sind. Ein zweiter Anordnungszustand der Bauteile 601 kann beispielsweise den Fall beschreiben, dass alle Bauteile 601 in die Aufnahmerinne 613 eingeordnet sind.

Über eine entsprechende Beschleunigungsbewegung, gegebenenfalls oszillatorische Beschleunigungsbewegung gemäß den oben beschriebenen Schritten kann wie oben beschrieben eine Relativbewegung der einzelnen Bauteile 601 relativ zur Sortiervorrichtung, die ortsfest mit dem Läufer 400 verbunden ist, bewirkt werden. Hierdurch kann gemäß dem oben beschriebenen Ansteuern des Läufers 400 gemäß entsprechender Bewegungsmuster erreicht werden, dass die einzelnen Bauteile 601 in die dafür vorgesehene Sortierrinne 613 eingeordnet werden. Wie zu Fig. 7 beschrieben, können hierzu geeignete beschleunigte Translationsbewegungen beziehungsweise beschleunigte Rotationsbewegungen in entsprechende Translationsbeschleunigungsrichtungen beziehungsweise um entsprechende Rotationsachsen durchgeführt werden.

Durch eine Überwachung des Sortierprozesses mittels einer Überwachungsvorrichtung (in Fig. 8 nicht dargestellt) können die ausgeführten Beschleunigungsbewegungen dahingehend angepasst werden, dass ein Einsortieren der einzelnen Bauteile 601 in die dafür vorgesehene Sortierrinne 613 erreicht werden kann. Der Sortierprozess kann ferner während des Verfahrens des Läufers ausgeführt werden.

Nach Einsortieren der einzelnen Bauteile in die Sortierrinne 613 kann mittels einer Beschleunigungsbewegung entlang der dargestellten Translationsbeschleunigungsrichtung T jedes in der Sortierrinne 613 angeordnete Bauteil 601 in Richtung des Ausgabeelements 615 beschleunigt werden, sodass über das Ausgabeelement 615 eine Ausgabe des jeweiligen Bauteils 601 an eine entsprechende Aufnahmeöffnung 611 bewirkt werden kann. Die Ausgabe der einzelnen Bauteile 601 über das Ausgabeelement 615 und das damit verbundene Entladen der einzelnen Bauteile 601 kann wiederum über das Ansteuern des Läufers 400 gemäß einer entsprechenden Beschleunigungsbewegung realisiert werden. Eine zusätzliche Entladevorrichtung zum Entladen der transportierten Bauteile kann somit vermieden werden.

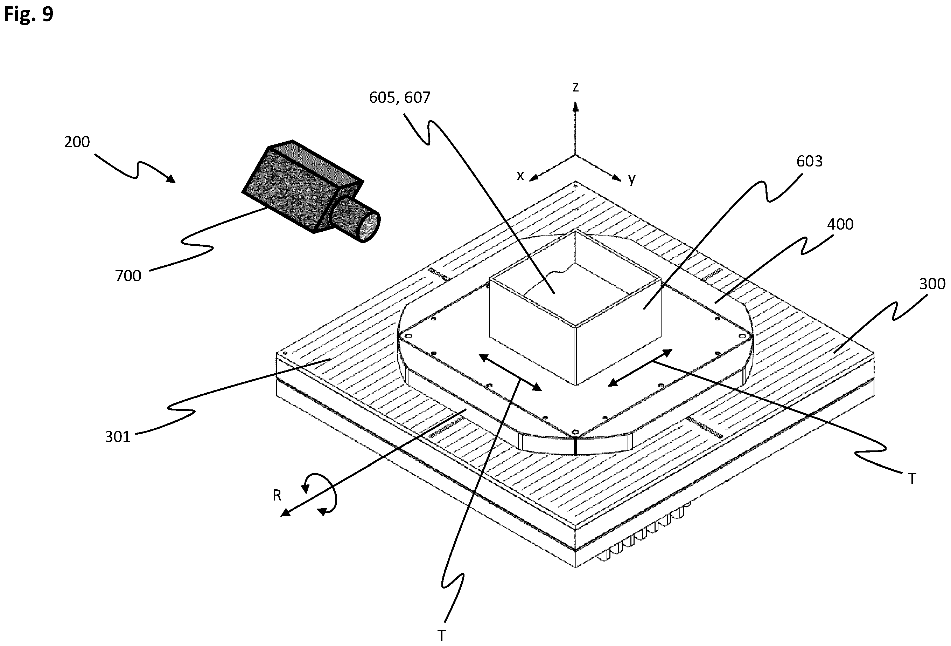

Fig. 9 zeigt eine weitere schematische Darstellung eines Läufers 400 auf einem Statormodul 300 gemäß einer weiteren Ausführungsform.

Fig. 9 zeigt eine weitere Ausführungsform des Planarantriebssystems 200, das eingerichtet ist, mittels Ausführens des erfindungsgemäßen Verfahrens 100 eine Verdichtungsfunktion beziehungsweise eine Mischung beziehungsweise Entmischungsfunktion durchzuführen. In der Ausführungsform in Fig. 9 ist das Objekt 600 als ein in einen Behälter 603 gefülltes Schüttgut 605 ausgebildet. Das Schüttgut kann beispielsweise ein granulatförmiges Material, ein pulverförmiges Material, ein körniges Material oder auch ein stückiges Gemenge sein. Das Schüttgut kann beispielsweise ein Baustoff sein oder ein Bestandteil eines Fertigungsprozesses. Alternativ kann das Schüttgut auch ein Zwischen- oder Endprodukt eines Nahrungsmittelherstellungsprozesses sein.

Mittels einer Rüttelbewegung durch Ausführen einer Beschleunigungsbewegung gemäß eines oszillatorischen Bewegungsmusters, wie oben beschrieben, kann eine Verdichtungsfunktion des im Behälter 603 angeordneten Schüttguts 605 bewirkt werden. Bei der Verdichtungsfunktion kann ein Verdichtungsgrad des Schüttguts innerhalb des Behälters erhöht werden, indem durch die Rüttelbewegung des Läufers 400 und die damit verbundene Relativbewegung des Schüttguts 605 relativ zum am Läufer 400 befestigten Behälter 603 das Schüttgut 605 in einer verdichteten Anordnung im Behälter 603 angeordnet werden kann. Ein erster Anordnungszustand kann hierbei eine Befüllung des Behälters 603 mit dem Schüttgut 605 in einer zufälligen Fülldichte sein, die beispielsweise durch Einfüllen des Schüttguts 605 in den Behälter 603 erreicht wird. Ein angestrebter zweiter Anordnungszustand kann hierbei eine Befüllung des Behälters 603 mit dem Schüttgut 605 in einer angestrebten höheren Fülldichte sein, der durch eine entsprechende Rüttelbewegung des Läufers 400 und ein damit verbundenes Verdichten des Schüttguts 605 innerhalb des Behälters 603 erreicht werden kann. Dies kann insbesondere bei Verpackungsvorgängen von Interesse sein, indem durch die Erhöhung der Fülldichte eine erhöhte Menge von Schüttgut in eine vorgesehene Verpackung gefüllt werden kann. Alternativ kann ein zweiter Anordnungszustand des Schüttguts 605 eine Befüllung des Behälters 603 mit dem Schüttgut 605 mit einer geringeren Fülldichte umfassen. Durch eine entsprechende Rüttelbewegung des Läufers 400 kann somit eine Auflockerung des Schüttguts 605 innerhalb des Behälters 603 erreicht werden.

Alternativ kann durch die in Fig. 9 gezeigte Ausführungsform eine Mischungsfunktion beziehungsweise Entmischungsfunktion erreicht werden. Insbesondere bei Schüttgut mit mehreren verschiedenen Bestandteilen kann durch eine entsprechende Rüttelbewegung des Läufers und des damit verbundenen Rüttelns des Schüttguts eine Vermischung der einzelnen Bestandteile des Schüttguts 605 erreicht werden.

Alternativ kann insbesondere bei Bestandteilen unterschiedlicher Größe des Schüttguts 605 eine Entmischungsfunktion erreicht werden, indem durch die Rüttelbewegung des Läufers 400 größere Bestandteile des Schüttguts aufgrund des Durchrüttelns an die Oberfläche des in den Behälter 603 gefüllten Schüttguts bewegt werden, von der diese in einem folgenden Prozess abgeschöpft werden können.

Ein erster Anordnungszustand kann hierbei die Befüllung des Behälters 603 mit dem Schüttgut 605 mit einem gegebenenfalls zufälligen und/oder unbestimmten Durchmischungs- beziehungsweise Entmischungsgrad der einzelnen Bestandteile des Schüttguts sein. Ein angestrebter zweiter Anordnungszustand kann hierbei die Befüllung des Behälters 603 mit dem Schüttgut 605 mit einem angestrebten Durchmischungs- beziehungsweise Entmischungsgrad sein, bei dem die einzelnen Bestandteile entweder beispielsweise vollständig durchmischt oder aber vollständig entmischt beziehungsweise getrennt sind.

Alternativ kann auch eine Mischung/Entmischung in Kombination mit einer Verdichtung/Auflockerung des Schüttguts 605 innerhalb des Behälters 603 erreicht werden.

Alternativ kann das Objekt 600 als ein in den Behälter befülltes Fluid 607 ausgebildet sein. Das Fluid 607 kann eine beliebige Flüssigkeit, gegebenenfalls mit mehreren Bestandteilen sein. Durch Ausführen einer entsprechenden Rüttelbewegung des Läufers 400 gemäß den oben beschriebenen Verfahrensschritten durch Ausführen einer entsprechenden Beschleunigungsbewegung gemäß den oben beschriebenen Bewegungsmustern kann eine Durchmischung der einzelnen Bestandteile des Fluids 607 erreicht werden. Alternativ kann eine Lösung von lösbaren Festkörperbestandteilen des Fluids 607 durch Ausführen der entsprechenden Rüttelbewegung beziehungsweise Rührbewegung des Läufers 400 erreicht werden.

Zum Ausführen der Rüttelbewegung des Läufers 400 kann dieser eine Beschleunigungsbewegung eines beliebigen Bewegungsmusters ausführen. Hierzu kann der Läufer beispielsweise eine oszillatorisch beschleunigte Translationsbewegung entlang einer beliebig wählbaren Translationsbeschleunigungsrichtung T ausführen. In Fig. 9 sind zwei Beispiele einer solchen Translationsbeschleunigungsrichtung T angegeben. Die dargestellten Translationsbeschleunigungsrichtungen T sind jedoch lediglich beispielhaft und eine translatorische Beschleunigungsbewegung kann entlang beliebig wählbarer in jede Raumrichtung orientierter Translationsbeschleunigungsrichtungen durchgeführt werden.

Alternativ kann eine Überlagerung verschiedener beschleunigter Translationsbewegungen entlang unterschiedlicher Translationsbeschleunigungsrichtungen T durchgeführt werden. Darüber hinaus kann der Läufer 400 in verschiedenen Frequenzen oszillatorisch beschleunigt werden. Neben der oszillatorisch beschleunigten Translationsbewegung kann der Läufer zusätzlich beziehungsweise alternativ eine oszillatorisch beschleunigte Rotationsbewegung um eine beliebige wählbare geeignete Rotationsachse R ausführen. In der in Fig. 9 gezeigten Ausführungsform ist die Rotationsachse R parallel zur Statoroberfläche 301 des Statormoduls angeordnet. Durch eine entsprechend oszillatorisch beschleunigte Rotationsbewegung des Läufers 400 kann somit eine Kippbewegung des Läufers 400 relativ zur Statoroberfläche 301 des Statormoduls 300 erreicht werden.

Zur Überwachung der Verdichtungsfunktion beziehungsweise Durchmischungs- beziehungsweise Entmischungsfunktion durch Ausführen der Beschleunigungsbewegung gemäß einem definierten Bewegungsmuster nach den oben beschriebenen Verfahrensschritten umfasst das Planarantriebssystem 200 in der gezeigten Ausführungsform ferner eine Überwachungsvorrichtung 700, die eingerichtet ist, den Fortschritt der Verdichtung beziehungsweise Mischung oder Entmischung des Schüttguts 605 zu verfolgen. Die Überwachungsvorrichtung 700 kann beispielsweise eine optische Überwachungsvorrichtung in Form einer Kamera sein. Alternativ kann die Überwachungsvorrichtung 700 eine beliebige aus dem Stand der Technik bekannte Lösung zum Überwachen eines Prozesses sein.

Die Überwachungsvorrichtung 700 kann eingerichtet sein, das Verfahren des Läufers 400 zwischen verschiedenen Positionen auf dem Statormodul 300 beziehungsweise auf der durch die Mehrzahl von Statormodulen generierten Lauffläche zu überwachen. Alternativ kann die Überwachungsvorrichtung 700 derart platziert sein, dass eine Überwachung des Läufers 400 primär in einem dafür vorgesehenen Bereich der Lauffläche ermöglicht ist.

Alternativ kann eine Überwachungsvorrichtung 700 auch an jedem Läufer individuell angebracht sein, sodass zu jedem Zeitpunkt eine direkte Überwachung des Anordnungszustands des auf dem Läufer 400 platzierten Objekts ermöglicht ist.

Alternativ kann eine Überwachungsvorrichtung 700 auch mehrere Läufer 400 gleichzeitig überwachen. Auch können Läufer 400 zum Überprüfen des erreichten Anordnungszustands nach Durchführung einer Beschleunigungsbewegung beispielsweise gemäß einem vordefinierten Bewegungsmuster mit einer vordefinierten Anzahl von auszuführenden Beschleunigungspulsen oder mit einer vordefinierten Ausführungsdauer oder zwischen der Durchführung verschiedener Bewegungsmuster den Überwachungsbereich der Überwachungsvorrichtung 700 ansteuern.

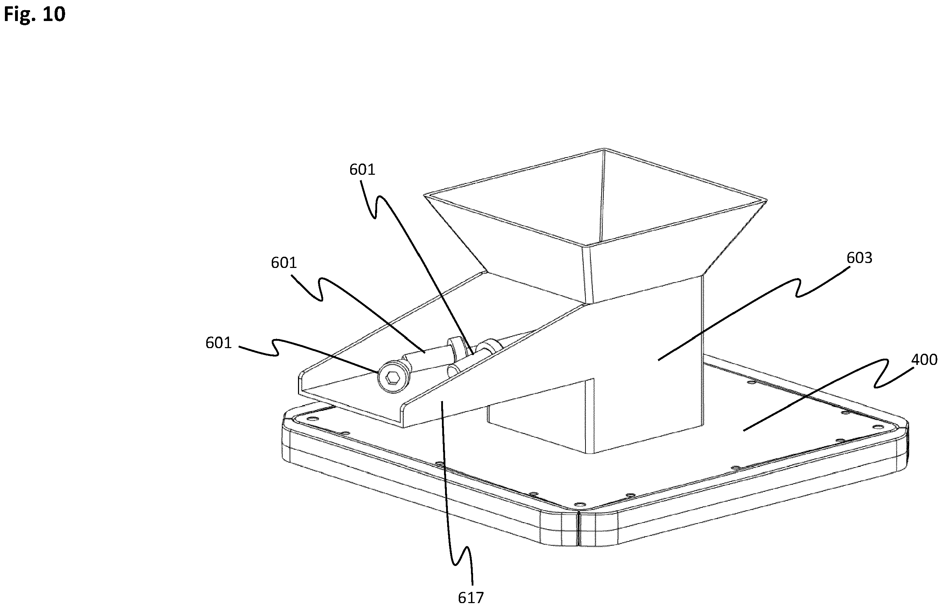

Fig. 10 zeigt eine weitere schematische Darstellung eines Läufers 400 gemäß einer weiteren Ausführungsform.

Fig. 10 zeigt eine weitere Ausführungsform eines Läufers 400 des erfindungsgemäßen Planarantriebssystems 200. Der Läufer 400 umfasst einen Behälter 603 mit einer Portioniervorrichtung 617. Mittels der Portioniervorrichtung 617 und Ausführen einer entsprechenden Beschleunigungsbewegung gemäß den oben beschriebenen Verfahrensschritten kann ein portionierbares Objekt 600 portioniert werden. In der Ausführungsform in Fig. 10 umfasst das Objekt 600 eine Mehrzahl von einzelnen Bauteilen 601, die in der Ausführungsform in Fig. 10 als Schraubenelemente ausgestaltet sind. Mittels einer entsprechenden Beschleunigungsbewegung kann eine beliebige Anzahl von Bauteilen 601 aus dem Behälter 603 über die Portioniervorrichtung 617 befördert und gegebenenfalls vom Läufer 400 in einer gewünschten Anzahl entladen werden. Das Entladen der einzelnen Bauteile 601 vom Läufer 400 kann somit ebenfalls durch entsprechendes Ansteuern des Läufers 400 bewirkt werden, ohne dass hierzu im Planarantriebssystem 200 eine zusätzliche Entladungsvorrichtung vorgesehen werden müsste. Durch entsprechendes Ansteuern des Läufers 400 gemäß den oben beschriebenen Verfahrensschritten zum Ausführen einer geeigneten Beschleunigungsbewegung kann somit das in den Behälter 603 gefüllte Objekt 600 beliebig portioniert werden, sodass eine gewünschte Anzahl von Bauteilen 601 durch entsprechendes Ansteuern des Läufers entladen werden kann.

Die in den Fig. 7 bis 10 dargestellten Ausführungsformen sind lediglich beispielhafter Natur und beschreiben ausschließlich einen Auszug verschiedener Funktionen, die durch das Ausführen des Verfahrens 100 durch das Planarantriebssystem 200 bewirkt werden können. Weder die gezeigten Ausführungsformen der verschiedenen Arten eines zu transportierenden Objekts 600 noch die gezeigten auf dem Läufer 400 ausgebildeten Vorrichtungen zum Sortieren beziehungsweise Portionieren sollen die Erfindung beschränken.

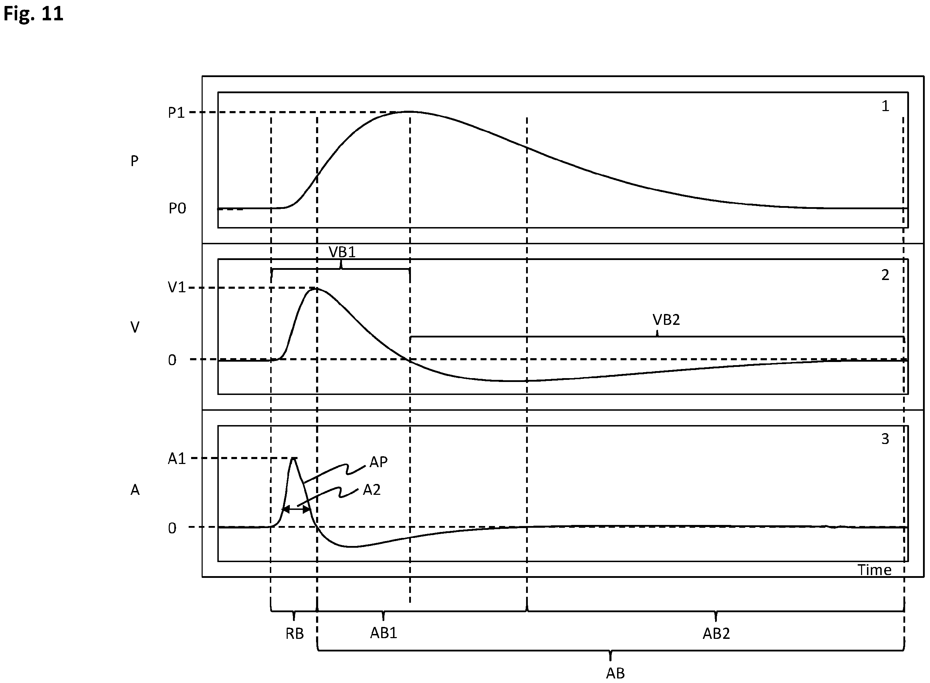

Fig. 11 zeigt eine graphische Darstellung eines Bewegungsmusters gemäß einer Ausführungsform.

In Fig. 11 ist eine graphische Darstellung einer beispielhaften Beschleunigungsbewegung gemäß eines beispielshaften Bewegungsmusters dargestellt. Fig. 11 zeigt hierbei sowohl die Bewegung des Läufers 400 relativ zum Statormodul 300 (Diagramm 1) als auch die Geschwindigkeit V (Diagramm 2) beziehungsweise die Beschleunigung A (Diagramm 3) der Bewegung des Läufers 400. Hierzu ist in Diagramm 1 ein zeitlicher Verlauf einer Position P des Läufers 400 relativ zum Statormodul 300 gezeigt. In Diagramm 2 ist ein zeitlicher Verlauf der Geschwindigkeit V der im Diagramm 1 dargestellten Positionsänderung des Läufers 400 relativ zum Statormodul 300 gezeigt. In Diagramm 3 ist ein zeitlicher Verlauf der entsprechenden Beschleunigung A der Bewegung des Läufers 400 relativ zum Statormodul 300 dargestellt.

Die in Diagramm 2 gezeigte Geschwindigkeit V entspricht der zeitlichen Änderung der Bewegung in Diagramm 1 und die Beschleunigung A in Diagramm 3 entspricht der zeitlichen Änderung der Geschwindigkeit V in Diagramm 2.

Die in den Diagrammen 1 bis 3 gezeigten zeitlichen Verläufe der Position P, der Geschwindigkeit V und der Beschleunigung A sind lediglich Beispiele für ein Bewegungsmuster. Abweichung von den gezeigten Verläufen sind ebenfalls denkbar.

Die in Fig. 11 dargestellte Ausführungsform eines Bewegungsmusters zeigt ausschließlich eine einmalige Beschleunigung des Läufers 400 gemäß einem Beschleunigungspuls AP in eine entsprechende Beschleunigungsrichtung gefolgt von einer Bremsbewegung mit entgegen gerichteter Beschleunigungsrichtung. Die entsprechende Bewegung kann hierbei eine translatorische Bewegung oder eine Rotationsbewegung des Läufers 400 relativ zum Statormodul 300 sein.

Die Beschleunigungsbewegung gemäß dem dargestellten Bewegungsmuster ist hierbei durch eine Beschleunigung RB in Form des Beschleunigungspulses AP mit einem Beschleunigungswert A1 und einer Beschleunigungsdauer in Form einer Pulsbreite A2, die als Halbwertsbreite des Pulses definiert ist, gekennzeichnet. Die ruckartige Beschleunigung RB des Beschleunigungspulses AP beschreibt hierbei eine kurzfristige Beschleunigung des Läufers 400, bei der über einen kurzen Zeitraum, der über die Pulsbreite A2 gegeben ist, die Beschleunigung A steil ansteigend auf einen maximalen Beschleunigungswert A1 ansteigt und nach Erreichen des maximalen Beschleunigungswerts A1 wieder auf den Ausgangwert steil abfällt.

Dieser kurzzeitige Beschleunigungspuls AP sorgt für eine starke Geschwindigkeitszunahme der Geschwindigkeit V des Läufers 400, in der die Geschwindigkeit V in einem kurzen Zeitraum auf einen maximalen Geschwindigkeitswert V1 ansteigt. Der Geschwindigkeitsverlauf ist in einem ersten Geschwindigkeitsbereich VB1 hierbei durch einen pulsförmigen Geschwindigkeitsverlauf gekennzeichnet, in dem in einem steilen Anstieg die Geschwindigkeit den maximalen Geschwindigkeitswert V1 annimmt. Im Bereich der ruckartigen Beschleunigung RB des Beschleunigungspulses AP erfährt der Läufer eine schnelle Positionsänderung, was in Diagramm 1 durch eine steil ansteigende Flanke des zeitlichen Verlaufs der Position P gekennzeichnet ist.

Im Anschluss auf den kurzzeitigen Beschleunigungspuls AP im Bereich der ruckartigen Beschleunigung RB, schließt sich in der gezeigten Ausführungsform ein Abbremsen AB der Bewegung des Läufers 400 an. Das Abbremsen AB ist durch eine negative Beschleunigung A gekennzeichnet. Die negative Beschleunigung kennzeichnet hierbei die der Beschleunigungsrichtung des Beschleunigungspulses AP entgegengesetzt gerichtete Beschleunigungsrichtung des Abbremsen AB beziehungsweise der Abbremsbewegung des Bewegungsmusters. Im Gegensatz zum Beschleunigungspuls AP während der ruckartigen Beschleunigung RB, ist das Abbremsen AB der Abbremsbewegung durch einen Beschleunigungsverlauf mit geringer zeitlicher Änderung gekennzeichnet. Das Abbremsen AB des Läufers 400 wird somit nicht ruckartig durchgeführt, sondern erfolgt allmählich über einen im Vergleich zur Pulsbreite A2 langen Zeitraum.

Wie oben beschrieben, führt der Beschleunigungspuls AP des ruckartigen Beschleunigens RB dazu, dass aufgrund der Trägheit eines auf dem Läufer 400 angeordneten Objekts 600 dieses Objekt 600 eine Bewegung relativ zum Läufer 400 ausführt, wodurch eine Änderung eines Anordnungszustands des Objekts 600 erreicht wird. Durch das allmähliche Abbremsen AB der Abbremsbewegung des Läufers 400, in dem die Bewegung des Läufers 400 langsam abgebremst wird, wird keine erneute Bewegung des Objekts 600 relativ zum Läufer 400 und eine damit verbundene weitere Änderung des Anordnungszustands bewirkt. Stattdessen wird die Bewegung des Objekts 600 relativ zum Läufer 400 sanft reduziert bis das Objekt 600 im durch den Beschleunigungspuls AP der ruckartigen Beschleunigung RB bewirkten geänderten Anordnungszustand auf dem Läufer 400 positioniert ist.

In der gezeigten Ausführungsform ist das Abbremsen AB in einer ersten Bremsbereich AB1 und einen zweiten Bremsbereich AB2 unterteilt. Im ersten Bremsbereich AB1 weist die Beschleunigung A einen negativen Wert auf. Hierdurch wird eine Beschleunigung generiert, die entgegengesetzt der ursprünglichen Beschleunigung des Beschleunigungspulses AP der ruckartigen Beschleunigung RB gerichtet ist. Der negative Beschleunigungswert wird im ersten Bremsbereich AB1 in einem sanft ansteigenden Verlauf wieder erhöht und mündet gegen Ende des ersten Bremsbereichs AB1 in einer unbeschleunigten Bewegung.

Durch die negative Beschleunigung im ersten Bremsbereich AB1 nimmt die Geschwindigkeit V im ersten Geschwindigkeitsbereich VB1 ausgehend vom maximalen Geschwindigkeitswert V1 in einer zur ansteigenden Flanke des Geschwindigkeitspulses flacheren absteigenden Flanke auf einen Nullwert zum Ende des ersten Geschwindigkeitsbereichs VB1 ab.

Die Positionsänderung P des Läufers 400 wird durch das Abbremsen AB und die negative Beschleunigung im ersten Bremsbereich AB1 verlangsamt, bis der Läufer 400 an einer Endposition P1 angekommen ist. In der Endposition P1 des Läufers 400 ist die Geschwindigkeit V am Ende des ersten Geschwindigkeitsbereichs VB1 am Nullpunkt angekommen.

Aufgrund der negativen Beschleunigung im ersten Bremsbereich AB1 des Abbremsens AB führt der Läufer 400 in der gezeigten Ausführungsform eine Rückbewegung aus, in der der Läufer 400 ausgehend von der erreichten Endposition P1 in Richtung einer Ausgangsposition P0, von der der Läufer 400 ausgehend durch den Beschleunigungspuls AP bewegt wurde, zurückbewegt wird. Diese Rückbewegung findet im Vergleich zur der durch den Beschleunigungspuls AP ruckartig beschleunigten Bewegung langsam mit geringer Geschwindigkeit V und geringer bis verschwindender Beschleunigung A entlang einer flach abfallenden Flanke des Bewegungsverlaufs statt. Während der Rückbewegung, ausgehend vom Erreichen der Endposition P1, weist die Bewegung des Läufers 400 während eines zweiten Geschwindigkeitsbereichs VB2 eine negative Geschwindigkeit V auf. Die negative Geschwindigkeit wird bis zum Erreichen der Ausgangsposition P0 entlang einer sanft ansteigenden Flanke im zweiten Geschwindigkeitsbereich VB2 erhöht, bis der Läufer 400 in der Ausgangsposition P0 zum Stehen kommt.

Anschließend an den ersten Bremsbereich AB1 erfolgt ein zweiter Bremsbereich AB2. Im zweiten Bremsbereich AB2 weist die Beschleunigung A einen geringen positiven Wert, sodass die Beschleunigung A des zweiten Bremsbereichs AB2 der Beschleunigung A des ersten Bremsbereichs AB1 wiederum entgegengesetzt ist.

Durch die leicht positive Beschleunigung im zweiten Bremsbereich AB2, die der Rückbewegung des Läufers 400 in Richtung der Ausgangsposition P0 entgegengesetzt gerichtet ist, wird die Rückbewegung des Läufers 400 behutsam abgebremst, sodass der Läufer 400 abschließend in der Ausgangsposition P0 zum Stehen kommt.

Das allmähliche Abbremsen der Bewegung des Läufers 400, das durch die negative Beschleunigung im ersten Bremsbereich AB1 und der flachen positiven Beschleunigungsflanke im zweiten Bremsbereich AB2 und die entsprechend langsame Abnahme der Geschwindigkeit V charakterisiert ist, kann somit verhindert werden, dass durch das Abbremsen eine weitere Änderung des Anordnungszustands bewirkt wird. Hierdurch kann somit erreicht werden, dass eine Änderung des Anordnungszustands ausschließlich durch das ruckartige Beschleunigen RB und den gezeigten Beschleunigungspuls AP erreicht wird, während durch das Abbremsen AB und das entsprechende allmähliche Abnehmen der Geschwindigkeit der Bewegung des Läufers 400 bewirkt wird, dass das jeweilige Objekt in dem geänderten Anordnungszustand mit dem Läufer 400 positioniert wird. Somit kann durch das ruckartige Beschleunigen RB der Anordnungszustand des Objekts 600 auf dem Läufer 400 wie gewünscht geändert werden, während das Objekt 600 in dem geänderten Anordnungszustand durch das allmähliche Abbremsen der Bewegung des Läufers 400 das Objekt 600 im geänderten Anordnungszustand mit dem Läufer 400 positioniert werden kann, sodass eine Zuordnung zwischen Objekt 600 und Läufer 400 beibehalten werden kann.

Durch die Rückbewegung des Läufers 400 zurück zur Ausgangsposition P0 kann darüber hinaus bewirkt werden, dass durch die Beschleunigung zur Änderung des Anordnungszustands des auf dem Läufer 400 positionierten Objekts 600 keine effektive Bewegung und damit verbundene Positionsänderung des Läufers 400 auf dem Statormodul 300 erfolgt. Das Beschleunigen des Läufers 400 gemäß dem gezeigten Bewegungsmusters ist somit beliebig oft wiederholbar, ohne dass hierdurch eine effektive Bewegung des Läufers 400 generiert wird, in der der Läufer 400 nach Ausführung der Bewegung in einer anderen Position auf dem Statormodul 300 positioniert ist als vor Beginn der Bewegung.

In der gezeigten Ausführungsform umfasst das Bewegungsmuster lediglich einen Beschleunigungspuls AP, mit dem ein rückartiges Beschleunigen des Läufers 400 und damit verbunden eine Änderung eines Anordnungszustands eines auf dem Läufer 400 angeordneten Objekts 600 bewirkt werden kann, und eine zusätzliche Bremsbewegung, mit der der Läufer 400 in die Ausgangsposition zurück bewegt wird.

Alternativ hierzu kann ein Bewegungsmuster, wie oben beschrieben, eine Mehrzahl aufeinander folgender Beschleunigungspulse AP umfassen und als ein oszillatorisches Bewegungsmuster ausgebildet sein.

Ein oszillatorisches Bewegungsmuster kann der gezeigten Ausführungsform folgend beispielsweise durch Aneinanderreihen mehrerer Beschleunigungspulse AP mit entgegengesetzter Beschleunigungsrichtung erreicht werden. Alternativ kann eine Mehrzahl von Beschleunigungspulsen AP mit einer ersten Beschleunigungsrichtung von einer Mehrzahl von Beschleunigungspulsen AP mit einer der ersten Beschleunigungsrichtung entgegen gesetzt gerichteten Beschleunigungsrichtung gefolgt ausgeführt werden. Die einzelnen Beschleunigungspulse AP können hierbei identische oder unterschiedliche Beschleunigungsstärken A1 und/oder Beschleunigungsdauern A2 aufweisen. Die Beschleunigungspulse können unmittelbar aufeinander folgend mit jeweils zeitlichen Lücken zwischen einzelnen Pulsen ausgeführt werden. Ein Abbremsen AB gemäß der gezeigten Ausführungsform kann für ein oszillatorisches Bewegungsmuster im Anschluss der ruckartigen Beschleunigung inklusive der Mehrzahl aneinander anschließender Beschleunigungspulse AP ausgeführt werden. Alternativ kann für ein oszillatorisches Bewegungsmuster ein Abbremsen jeweils unmittelbar nach jedem Beschleunigungspuls AP ausgeführt werden.

Alternativ zu der in Fig. 11 gezeigten Ausführungsform eines Bewegungsmusters sind beliebige Beschleunigungsbewegungen denkbar, bei denen ein Läufer 400 mittels einer ruckartigen Beschleunigung gemäß einem Beschleunigungspuls beschleunigt wird und gegebenenfalls mit einer Bremsbewegung zum Beenden der Bewegung des Läufers 400 bewegt wird.

### Bezugszeichenliste

- 100: Verfahren zum Steuern eines Planarantriebssystems
- 101: Positionierschritt
- 103: Anordnungsschritt
- 105: Transportschritt
- 107: Entladeschritt
- 109: Bestimmungsschritt
- 111: Bewegungsmusterauswahlschritt
- 113: erster Detektionsschritt
- 115: Anpassungsschritt
- 117: zweiter Detektionsschritt
- 119: Kraftermittlungsschritt
- 121: Überwachungsschritt

- 200: Planarantriebssystem
- 201: Steuereinheit
- 203: Datenverbindung

- 300: Statormodul
- 301: Träger
- 303: Statoroberfläche
- 305: Statormodulgehäuse
- 307: Statoreinheit
- 308: Statorsegment
- 309: Statorleiter
- 310: Kontaktstruktur
- 311: Statorleiterzwischenraum

- 400: Läufer
- 401: Magnetanordnung
- 402: Lauffläche
- 403: Freifläche
- 405: Befestigungsstruktur
- 407: erste Läuferrichtung
- 409: zweite Läuferrichtung
- 411: erste Magneteinheit
- 413: zweite Magneteinheit
- 415: dritte Magneteinheit
- 417: vierte Magneteinheit

- 500: Sensormodul
- 501: Magnetfeldsensor
- 503: erstes periodisches Gitter
- 505: zweites periodisches Gitter
- 507: erste Richtung
- 509: zweite Richtung

- 600: Objekt
- 601: Bauteil
- 603: Behälter
- 605: Schüttgut
- 607: Fluid
- 609: Sortiervorrichtung
- 611: Aufnahmeöffnung
- 613: Sortierrinne
- 615: Ausgabeelement
- 617: Portioniervorrichtung

- 700: Überwachungseinrichtung

- D: Bewegungsrichtung
- R: Rotationsachse
- T: Translationsbeschleunigungsrichtung
- P: Position
- P0: Ausgangsposition
- P1: Endposition
- V: Geschwindigkeit
- V1: maximaler Geschwindigkeitswert
- VB1: erster Geschwindigkeitsbereich
- VB2: zweiter Geschwindigkeitsbereich
- A: Beschleunigung
- AP: Beschleunigungspuls
- A1: maximaler Beschleunigungswert
- A2: Pulsbreite
- RB: ruckartiges Beschleunigen
- AB: Abbremsen
- AB1: erster Bremsbereich
- AB2: zweiter Bremsbereich

## Patentansprüche

1. Verfahren (100) zum Steuern eines Planarantriebssystems (200), wobei das Planarantriebssystem (200) wenigstens eine Steuereinheit (201), ein Statormodul (300) mit einer Statoroberfläche (303) und einen auf der Statoroberfläche (303) positionierbaren und verfahrbaren Läufer (400) umfasst, wobei zwischen einem Läufermagnetfeld des Läufers und durch das Statormodul (300) generierbaren Statormagnetfeldern eine magnetische Kopplung erzielbar ist, und wobei über eine gezielte Ansteuerung der Statormagnetfelder eine Bewegung des Läufers (400) relativ zum Statormodul (300) ermöglicht ist, umfassend:
Positionieren eines Objekts (600) auf einem Läufer (400) in einem ersten Anordnungszustand des Objekts (600) relativ zum Läufer (400) in einem Positionierschritt (101), wobei das Objekt (600) als ein Festkörperobjekt oder ein flüssiges Objekt oder ein pulverförmiges Objekt oder ein granulatförmiges Objekt ausgebildet ist;
wobei das Verfahren (100) **gekennzeichnet ist, durch**:
Ausführen einer Beschleunigungsbewegung des Läufers (400) gemäß einem definierten Bewegungsmuster und **durch** die Beschleunigungsbewegung Anordnen des auf dem Läufer (400) in dem ersten Anordnungszustand relativ zum Läufer (400) positionierten Objekts (600) in einen zweiten Anordnungszustand relativ zum Läufer (400) in einem Anordnungsschritt (103), wobei ein Anordnungszustand wenigstens eines aus der Liste umfasst: eine Positionierung/Orientierung des Objekts (600) relativ zum Läufer (400), ein Ordnungsgrad/sortiergrad einer Mehrzahl von Objekten (600), ein Mischungsgrad/-Zustand, ein Entmischungsgrad/-Zustand, ein Lösungsgrad/-Zustand eines granulatförmigen, pulverförmigen oder flüssigen Objekts mit wenigstens zwei Bestandteilen, ein Verdichtungsgrad/-Zustand eines als Schüttgut ausgebildeten Objekts, wobei die Beschleunigungsbewegung des Läufers (400) durch ein entsprechendes Ansteuern der Statormagnetfelder erreicht wird, wobei das Bewegungsmuster wenigstens einen Beschleunigungspuls (AP) mit einer Beschleunigungsstärke und einer Beschleunigungsdauer in eine Beschleunigungsrichtung umfasst, wobei das Bewegungsmuster eine beschleunigte Translationsbewegung in eine Translationsbeschleunigungsrichtung (T) und/oder eine beschleunigte Rotationsbewegung um eine Rotationsachse (R) umfasst, und wobei die Translationsbeschleunigungsrichtung (T) und/oder die Rotationsachse (R) in einer beliebig wählbaren Raumrichtung orientiert sind.

2. Verfahren (100) nach Anspruch 1, wobei das Bewegungsmuster eine Überlagerung einer Mehrzahl von beschleunigten Translationsbewegungen in unterschiedlich orientierte Translationsbeschleunigungsrichtungen (T) und/oder einer Mehrzahl von beschleunigten Rotationsbewegungen um verschiedene Rotationsachsen (R) umfasst.

3. Verfahren (100) nach einem der voranstehenden Ansprüche, wobei das Bewegungsmuster ein oszillatorisches Bewegungsmuster mit zeitlich aufeinanderfolgenden Beschleunigungspulsen (AP) in entgegengesetzt orientierte Beschleunigungsrichtungen umfasst, und wobei das Bewegungsmuster eine variierbare Frequenz aufweist.

4. Verfahren (100) nach Anspruch 3, wobei das Bewegungsmuster ein an das anzuordnende Objekt (600) anpassbares Bewegungsmuster ist, und wobei eine Translationsbeschleunigungsrichtung und/oder eine Rotationsachse und/oder eine Anzahl von aufeinanderfolgenden Beschleunigungspulsen und/oder eine Frequenz und/oder eine Beschleunigungsstärke der Beschleunigungspulse und/oder eine Beschleunigungsdauer der Beschleunigungspulse und/oder eine Ausführungsdauer des Bewegungsmusters anpassbar sind; oder
wobei das Bewegungsmuster ein vordefiniertes Bewegungsmuster einer Mehrzahl von vordefinierten und in einer Datenbank hinterlegten Bewegungsmuster mit vordefinierter Translationsbeschleunigungsrichtung und/oder mit vordefinierter Rotationsachse und/oder mit vordefinierter Anzahl von aufeinanderfolgenden Beschleunigungspulsen und/oder vordefinierter Frequenz und/oder mit vordefinierter Beschleunigungsstärke der Beschleunigungspulse und/oder mit vordefinierter Beschleunigungsdauer der Beschleunigungspulse und/oder mit vordefinierter Ausführungsdauer des Bewegungsmusters ist.

5. Verfahren (100) nach einem der voranstehenden Ansprüche, wobei das Bewegungsmuster ferner eine Bremsbewegung umfasst, wobei die Bremsbewegung eine der Beschleunigungsrichtung des Beschleunigungspulses entgegen gerichtete Beschleunigungsrichtung aufweist, wobei die Bremsbewegung eine geringere Beschleunigungsstärke und/oder eine größere Beschleunigungsdauer und/oder eine geringere zeitliche Beschleunigungsänderung als der Beschleunigungspuls aufweist, und wobei die Bremsbewegung den Läufer in eine Ausgangsposition des Läufers (400) vor Beginn der Beschleunigungsbewegung bewegt.

6. Verfahren (100) nach einem der voranstehenden Ansprüche, ferner umfassend: Verfahren des Läufers (400) aus einer ersten Position des Läufers (400) relativ zum Statormodul (300) in eine zweite Position des Läufers (400) relativ zum Statormodul (300) und Transportieren des auf dem Läufer (400) angeordneten Objekts (600) in einem Transportschritt (105), wobei die Beschleunigungsbewegung zeitgleich zum Verfahren des Läufers (400) ausgeführt wird.

7. Verfahren (100) nach einem der voranstehenden Ansprüche, ferner umfassend: Entladen des Objekts (600) in dem zweiten Anordnungszustand vom Läufer (400) in der zweiten Position des Läufers (400) relativ zum Statormodul (300) in einem Entladeschritt (107).

8. Verfahren (100) nach einem der voranstehenden Ansprüche, ferner umfassend:
Bestimmen einer Art des Objekts (600), einen ersten Anordnungszustand und einen zu erzielenden zweiten Anordnungszustand des Objekts(600) in einem Bestimmungsschritt (109), wobei die Art des Objekts (600) eine Größe, eine Gestalt, eine Masse, eine Form, eine Schüttguteigenschaft, eine Flüssigkeitseigenschaft, ein Durchmischungsgrad und einen Lösungsgrad umfasst, wobei der erste Anordnungszustand und der zweite Anordnungszustand in Abhängigkeit der Art des Objekts (600) eine Positionierung und/oder Orientierung relativ zum Läufer (400), ein Verdichtungsgrad, ein Durchmischungsgrad, Entmischungsgrad, ein Lösungsgrad, des Objekts (600) umfasst; und
Auswählen eines Bewegungsmusters aus einer Liste möglicher Bewegungsmuster, wobei das Bewegungsmuster eine Translationsbeschleunigungsrichtung und/oder eine Rotationsachse und/oder eine Anzahl von aufeinanderfolgenden Beschleunigungspulsen und/oder eine Frequenz und/oder eine Beschleunigungsstärke der Beschleunigungspulse und/oder eine Beschleunigungsdauer der Beschleunigungspulse und/oder eine Ausführungsdauer des Bewegungsmusters definiert, die geeignet ist oder sind, das Objekt (600) aus dem ersten Anordnungszustand in den zweiten Anordnungszustand zu überführen, in einem Bewegungsmusterauswahlschritt (111).

9. Verfahren (100) nach einem der voranstehenden Ansprüche, wobei der Anordnungsschritt (103) umfasst:
Überwachen des Objekts (600) und Detektieren eines Anordnungszustands des Objekts (600) in einem ersten Detektionsschritt (113);
Anpassen der Ausführung der Beschleunigungsbewegung im Anordnungsschritt (105) auf Basis des detektierten Anordnungszustands in einem Anpassungsschritt (115), wobei das Anpassen der Ausführung der Beschleunigungsbewegung ein Anpassen des Bewegungsmusters oder ein Ausführen eines weiteren Bewegungsmusters umfasst; und/oder
Überwachen des Objekts (600) während des Anordnungsschritts (105) und Detektieren des Objekts (600) in dem zweiten Anordnungszustand und beenden der Beschleunigungsbewegung in einem zweiten Detektionsschritt (117).

10. Verfahren (100) nach Anspruch 9, wobei der erste Detektionsschritt (113) und/oder der zweite Detektionsschritt (117) umfassen:
Ermitteln einer magnetischen Kraft, die benötigt wird, mittels der magnetischen Kopplung zwischen dem Läufermagnetfeld und dem Statormagnetfeld den Läufer (400) in einer Schwebeposition oberhalb der Statoroberfläche (303) des Statormoduls (300) zu halten, und/oder die benötigt wird, mittels der magnetischen Kopplung zwischen dem Läufermagnetfeld und dem Statormagnetfeld den Läufer (400) in der Beschleunigungsbewegung zu beschleunigen und/oder abzubremsen, und/oder die benötigt wird, mittels der magnetischen Kopplung zwischen dem Läufermagnetfeld und dem Statormagnetfeld den Läufer (400) zu verfahren, in einem Kraftermittlungsschritt (119); und
Ermitteln des ersten Anordnungszustands und/oder des zweiten Anordnungszustands des Objekts (600) unter Berücksichtigung der benötigten magnetischen Kraft.

11. Verfahren (100) nach Anspruch 9 oder 10, wobei der erste Detektionsschritt (113) und/oder der zweite Detektionsschritt (117) umfassen:
Überwachen des Objekts (600) auf dem Läufer über eine Überwachungseinrichtung (700) in einem Überwachungsschritt (121), wobei die Überwachungseinrichtung (700) als eine optische Überwachungseinrichtung oder als eine akustische Überwachungseinrichtung oder als eine elektromagnetische Überwachungseinrichtung ausgebildet und eingerichtet ist, durch Empfangen entsprechender optischer oder akustischer oder elektromagnetischer Messsignale einen Anordnungszustand des Objekts (600) zu ermitteln.

12. Verfahren (100) nach einem der voranstehenden Ansprüche 8 bis 11, wobei das Bestimmen der Art des Objekts (600) im Bestimmungsschritt (109) und/oder das Auswählen des Bewegungsmusters im Bewegungsmusterauswahlschritt (111) und/oder das Detektieren des Anordnungszustands im ersten Detektionsschritt (113) und/oder das Anpassen des Bewegungsmusters im Anpassungsschritt (115) und/oder das Detektieren des Objekts (600) im zweiten Anordnungszustand im zweiten Detektionsschritt (117) durch ein entsprechend trainiertes neuronales Netz oder durch eine Mehrzahl entsprechend trainierter neuronales Netz durchgeführt wird.

13. Verfahren (100) nach einem der voranstehenden Ansprüche, wobei das Objekt (600) ein Bauteil (601) oder eine Mehrzahl von Bauteilen (601) umfasst, wobei ein Anordnungszustand des Objekts (600) relativ zum Läufer (400) eine Position jedes der Bauteile (601) auf dem Läufer (400) und/oder eine Orientierung jedes der Bauteile (601) relativ zum Läufer (400) umfasst, wobei zwei Positionen eines Bauteils (601) auf dem Läufer (400) durch eine Translationsbewegung des Bauteils (601) auf dem Läufer (400) ineinander überführbar sind, wobei zwei Orientierungen eines Bauteils (601) relativ zum Läufer (400) durch eine Rotation des Bauteils (601) um eine Rotationsachse ineinander überführbar sind, und wobei durch eine durch den Beschleunigungspuls (AP) bewirkte ruckartig beschleunigte Bewegung des Läufers (400) aufgrund einer Trägheit des Objekts (600) das zu transportierende Objekt (600) zu einer Translationsbewegung und/oder einer Kippbewegung und/oder Drehbewegung relativ zum Läufer (400) angetrieben wird.

14. Verfahren (100) nach einem der voranstehenden Ansprüche, wobei das Objekt (600) ein in einen Behälter (603) befülltes Schüttgut (605) umfasst, und wobei ein Anordnungszustand des Objekts (600) eine Befüllung des Schüttguts (605) im Behälter (603) mit einer bestimmten Fülldichte umfasst, oder wobei das Objekt (600) ein in einen Behälter (603) befülltes Schüttgut (605) und/oder Fluid (607) mit wenigstens zwei Bestandteilen umfasst, und/oder wobei ein Anordnungszustand des Objekts (600) eine Befüllung des Schüttguts (605) oder Fluids (607) im Behälter (603) mit einer bestimmten Durchmischung oder Entmischung der wenigstens zwei Bestandteile umfasst.

15. Planarantriebssystem (200) mit wenigstens einer Steuereinheit (201), einem Statormodul (300) mit einer Statoroberfläche (303) und einem auf der Statoroberfläche (303) positionierbaren Läufer (400), wobei zwischen einem Läufermagnetfeld des Läufers und durch das Statormodul (300) generierbaren Statormagnetfeldern eine magnetische Kopplung erzielbar ist, wobei über eine gezielte Ansteuerung der Statormagnetfelder eine Bewegung des Läufers relativ zum Statormodul ermöglicht ist, wobei auf dem Läufer (400) ein Objekt (600) in einem ersten Anordnungszustand positionierbar ist, und wobei das Planarantriebssystem (200) ausgebildet ist, das Verfahren (100) nach einem der voranstehenden Ansprüche 1 bis 14 auszuführen.

## Claims

1. A method (100) for controlling a planar drive system (200), wherein the planar drive system (200) comprises at least a controller (201), a stator module (300) having a stator surface (303) and a rotor (400) which may be positioned and moved on the stator surface (303), wherein a magnetic coupling may be achieved between a rotor magnetic field of the rotor and stator magnetic fields which may be generated by the stator module (300), and wherein a movement of the rotor (400) relative to the stator module (300) is allowed for by a targeted control of the stator magnetic fields, comprising:
positioning an object (600) on a rotor (400) in a first arrangement state of the object (600) relative to the rotor (400) in a positioning step (101), wherein the object (600) is embodied as a solid object or as a liquid object or as a powdered object or as a granular object;
wherein the method (100) is **characterized in**
carrying out an accelerating movement of the rotor (400) according to a defined movement pattern and by the accelerating movement arranging the object (600) positioned on the rotor (400) in the first arrangement state relative to the rotor (400) into a second arrangement state relative to the rotor (400) in an arranging step (103), wherein an arrangement state comprises at least one from the list: a positioning/orienting of the object (600) relative to the rotor (400), a degree of ordering/sorting of a plurality of objects (600), a degree/state of mixing, a degree/state of de-mixing, a degree/state of dissolution of a granular, powdered or liquid object having at least two components, a degree/state of compacting of an object embodied as a bulk material, wherein the accelerating movement of the rotor (400) is achieved by actuating the stator magnetic fields accordingly, wherein the movement pattern comprises at least an acceleration pulse (AP) having an acceleration strength and an acceleration duration in an acceleration direction, wherein the movement pattern comprises an accelerated translational movement in a translational acceleration direction (T) and/or an accelerated rotational movement about a rotational axis (R), and wherein the translational acceleration direction (T) and/or the rotational axis (R) are oriented in an arbitrarily selectable spatial direction.

2. The method (100) according to claim 1, wherein the movement pattern comprises a superposition of a plurality of accelerated translational movements in differently oriented translational acceleration directions (T) and/or a plurality of accelerated rotational movements about different rotational axes (R).

3. The method (100) according to any one of the preceding claims, wherein the movement pattern comprises an oscillatory movement pattern having temporally successive acceleration pulses (AP) in oppositely oriented acceleration directions, and wherein the movement pattern has a variable frequency.

4. The method (100) according to claim 3, wherein the movement pattern is a movement pattern that may be individually adjusted to the object (600) to be arranged, and wherein a translation acceleration direction and/or a rotational axis and/or a number of successive acceleration pulses and/or a frequency and/or an acceleration strength of the acceleration pulses and/or an acceleration duration of the acceleration pulses and/or an execution duration of the movement pattern may be adjusted; or
wherein the movement pattern is a predefined movement pattern of a plurality of predefined movement patterns stored in a database with predefined translation acceleration direction and/or with predefined rotational axis and/or with predefined number of successive acceleration pulses and/or with predefined frequency and/or with predefined acceleration strength of the acceleration pulses and/or with predefined acceleration duration of the acceleration pulses and/or with predefined execution duration of the movement pattern.

5. The method (100) according to any one of the preceding claims, wherein the movement pattern further comprises a braking movement, wherein the braking movement comprises an acceleration direction opposite to the acceleration direction of the acceleration pulse, wherein the braking movement has a smaller acceleration strength and/or a larger acceleration duration and/or a smaller temporal acceleration change than the acceleration pulse, and wherein the braking movement moves the rotor to an initial position of the rotor (400) prior to the start of the accelerating movement.

6. The method (100) according to any one of the preceding claims, further comprising: moving the rotor (400) from a first position of the rotor (400) relative to the stator module (300) to a second position of the rotor (400) relative to the stator module (300) and transporting the object (600) arranged on the rotor (400) in a transporting step (105), wherein the accelerating movement is performed simultaneously with the moving of the rotor (400).

7. The method (100) according to any one of the preceding claims, further comprising: unloading the object (600) in the second arrangement state of the rotor (400) in the second position of the rotor (400) relative to the stator module (300) in an unloading step (107).

8. The method (100) according to any one of the preceding claims, further comprising:
determining a type of the object (600), a first arrangement state of the object (600) and a second arrangement state of the object (600) to be achieved in a determining step (109), wherein the type of the object (600) comprises a size, a shape, a mass, a form, a bulk property, a liquid property, a degree of mixing, and a degree of dissolution, wherein the first arrangement state and the second arrangement state comprise, depending on the type of object (600), a positioning and/or orientation relative to the rotor (400), a degree of compaction, a degree of mixing, a degree of de-mixing, a degree of dissolution, of the object (600) and
selecting a movement pattern from a list of possible movement patterns, wherein the movement pattern defines a translational acceleration direction and/or a rotational axis and/or a number of successive acceleration pulses and/or a frequency and/or an acceleration strength of the acceleration pulses and/or an acceleration duration of the acceleration pulses and/or an execution duration of the movement pattern, which is or are suitable for transferring the object (600) from the first arrangement state to the second arrangement state, in a movement pattern selecting step (111).

9. The method (100) according to any one of the preceding claims, wherein the arranging step (103) comprises:
monitoring the object (600) and detecting an arrangement state of the object (600) in a first detecting step (113);
adjusting the execution of the accelerating movement in the arranging step (105) on the basis of the detected arrangement state in an adjusting step (115), wherein adjusting the execution of the accelerating movement comprises adjusting the movement pattern or executing a further movement pattern; and/or
monitoring the object (600) during the arranging step (105) and detecting the object (600) in the second arranging state and terminating the accelerating movement in a second detecting step (117).

10. The method (100) according to claim 9, wherein the first detecting step (113) and/or the second detecting step (117) comprise:
determining a magnetic force required to hold the rotor (400) in a floating position above the stator surface (303) of the stator module (300) with the aid of the magnetic coupling between the rotor magnetic field and the stator magnetic field, and/or required to accelerate and/or decelerate the rotor (400) in the accelerating movement with the aid of the magnetic coupling between the rotor magnetic field and the stator magnetic field and/or required to move the rotor (400) with the aid of the magnetic coupling between the rotor magnetic field and the stator magnetic field, in a force determining step (119); and
determining the first arrangement state and/or the second arrangement state of the object (600) taking into account the required magnetic force.

11. The method (100) according to claim 9 or 10, wherein the first detecting step (113) and/or the second detecting step (117) comprise:
monitoring the object (600) on the rotor via a monitoring device (700) in a monitoring step (121), wherein the monitoring device (700) is embodied as an optical monitoring device or as an acoustic monitoring device or as an electromagnetic monitoring device and is set up to determine an arrangement state of the object (600) by receiving corresponding optical or acoustic or electromagnetic measuring signals.

12. The method (100) according to any one of the preceding claims 8 to 11, wherein determining the type of object (600) in the determining step (109) and/or selecting the movement pattern in the movement pattern selecting step (111) and/or detecting the arrangement state in the first detecting step (113) and/or adjusting the movement pattern in the adjusting step (115) and/or detecting the object (600) in the second arrangement state in the second detecting step (117) is carried out by a correspondingly trained neural network or by a plurality of correspondingly trained neural networks.

13. The method (100) according to any one of the preceding claims, wherein the object (600) comprises a component (601) or a plurality of components (601), wherein an arrangement state of the object (600) relative to the rotor (400) comprises a position of each of the components (601) on the rotor (400) and/or an orientation of each of the components (601) relative to the rotor (400), wherein two positions of a component (601) on the rotor (400) may be converted into each other by a translational movement of the component (601) on the rotor (400), wherein two orientations of a component (601) relative to the rotor (400) may be converted into each other by a rotation of the component (601) about a rotational axis, and wherein by a movement of the rotor (400) accelerated in a jerky manner due to the accelerating pulse (AP) the object (600) to be transported is driven to carry out a translational movement and/or a tilting movement and/or a rotary movement relative to the rotor (400) due to an inertia of the object (600).

14. The method (100) according to any one of the preceding claims, wherein the object (600) comprises a bulk material (605) filled into a container (603), and wherein an arrangement state of the object (600) comprises filling the bulk material (605) in the container (603) with a certain filling density, or wherein the object (600) comprises a bulk material (605) and/or fluid (607) filled into a container (603) with at least two components, and/or wherein an arrangement state of the object (600) comprises filling the bulk material (605) or fluid (607) in the container (603) with a certain mixing or de-mixing of the at least two components.

15. A planar drive system (200) having at least a controller (201), a stator module (300) having a stator surface (303) and a rotor (400) which may be positioned on the stator surface (303), wherein a magnetic coupling may be achieved between a rotor magnetic field of the rotor and stator magnetic fields which may be generated by the stator module (300), wherein a movement of the rotor relative to the stator module is allowed for via a targeted control of the stator magnetic fields, wherein an object (600) may be positioned on the rotor (400) in a first arrangement state, and wherein the planar drive system (200) is embodied to carry out the method (100) according to any of the preceding claims 1 to 14.

## Revendications

1. Procédé (100) de commande d'un système d'entraînement planaire (200), le système d'entraînement planaire (200) comprenant au moins une unité de commande (201), un module statorique (300) pourvu d'une surface statorique (303) et un rotor (400) qui peut être positionné et déplacé sur la surface statorique (303), un couplage magnétique pouvant être réalisé entre un champ magnétique de rotor du rotor et des champs magnétiques de stator qui peuvent être générés par le module statorique (300), et un mouvement du rotor (400) par rapport au module statorique (300) étant rendu possible par le biais d'une commande ciblée des champs magnétiques de stator, ledit procédé comprenant les étapes suivantes :
positionner un objet (600) sur un rotor (400) dans un premier état d'agencement de l'objet (600) par rapport au rotor (400) dans une étape de positionnement (101), l'objet (600) étant conçu sous la forme d'un objet solide ou d'un objet liquide ou d'un objet pulvérulent ou d'un objet granulaire ;
le procédé (100) étant **caractérisé par** les étapes suivantes :
exécuter un mouvement d'accélération du rotor (400) suivant un modèle de mouvement défini et, au moyen du mouvement d'accélération, disposer l'objet (600), positionné sur le rotor (400) dans le premier état d'agencement par rapport au rotor (400), dans un deuxième état d'agencement par rapport au rotor (400) dans une étape d'agencement (103), un état d'agencement comprenant au moins un élément de la liste suivante : un positionnement/une orientation de l'objet (600) par rapport au rotor (400), un degré de classement/degré de tri d'une pluralité d'objets (600), un degré/état de mélange, un degré/état de séparation, un degré/état de dissolution d'un objet granulaire, pulvérulent ou liquide comprenant au moins deux composants, un degré/état de compaction d'un objet conçu comme un matériau en vrac, le mouvement d'accélération du rotor (400) étant réalisé par une commande appropriée des champs magnétiques de stator, le modèle de mouvement comprenant au moins une impulsion d'accélération (AP) ayant une intensité d'accélération et une durée d'accélération dans une direction d'accélération, le modèle de mouvement comprenant un mouvement de translation accéléré dans une direction d'accélération en translation (T) et/ou un mouvement de rotation accéléré sur un axe de rotation (R), et la direction d'accélération en translation (T) et/ou l'axe de rotation (R) étant orientés dans une direction spatiale sélectionnable arbitrairement.

2. Procédé (100) selon la revendication 1, le modèle de mouvement comprenant une superposition d'une pluralité de mouvements de translation accélérés dans des directions d'accélération en translation (T) orientées différemment et/ou d'une pluralité de mouvements de rotation accélérés sur différents axes de rotation (R).

3. Procédé (100) selon l'une des revendications précédentes, le modèle de mouvement comprenant un modèle de mouvement oscillatoire avec des impulsions d'accélération (AP) temporellement successives dans des directions d'accélération orientées de manière opposée, et le modèle de mouvement ayant une fréquence variable.

4. Procédé (100) selon la revendication 3, le modèle de mouvement étant un modèle de mouvement qui peut être adapté à l'objet (600) à disposer, et une direction d'accélération en translation et/ou un axe de rotation et/ou un nombre d'impulsions d'accélération successives et/ou une fréquence et/ou une intensité d'accélération des impulsions d'accélération et/ou une durée d'accélération des impulsions d'accélération et/ou une durée d'exécution du modèle de mouvement étant adaptables ; ou
le modèle de mouvement étant un modèle de mouvement prédéfini d'une pluralité de modèles de mouvement prédéfinis qui sont stockés dans une base de données et qui ont une direction d'accélération en translation prédéfinie et/ou un axe de rotation prédéfini et/ou un nombre prédéfini d'impulsions d'accélération successives et/ou une fréquence prédéfinie et/ou une intensité d'accélération prédéfinie des impulsions d'accélération et/ou une durée d'accélération prédéfinie des impulsions d'accélération et/ou une durée d'exécution prédéfinie du modèle de mouvement.

5. Procédé (100) selon l'une des revendications précédentes, le modèle de mouvement comprenant en outre un mouvement de freinage, le mouvement de freinage ayant une direction d'accélération opposée à la direction d'accélération de l'impulsion d'accélération, le mouvement de freinage présentant une intensité d'accélération plus faible et/ou une durée d'accélération plus longue et/ou une variation d'accélération dans le temps plus faible que pour l'impulsion d'accélération, et le mouvement de freinage déplaçant le rotor dans une position de départ du rotor (400) avant que le mouvement d'accélération ne commence.

6. Procédé (100) selon l'une des revendications précédentes, comprenant en outre les étapes suivantes : déplacer le rotor (400) d'une première position du rotor (400) par rapport au module statorique (300) jusqu'à une deuxième position du rotor (400) par rapport au module statorique (300) et transporter l'objet (600) disposé sur le rotor (400) dans une étape de transport (105), le mouvement d'accélération étant effectué en même temps que le déplacement du rotor (400) .

7. Procédé (100) selon l'une des revendications précédentes, comprenant en outre l'étape suivante :
décharger l'objet (600) dans le deuxième état d'agencement du rotor (400) dans la deuxième position du rotor (400) par rapport au module statorique (300) dans une étape de déchargement (107).

8. Procédé (100) selon l'une des revendications précédentes, comprenant en outre les étapes suivantes :
déterminer un type de l'objet (600), un premier état d'agencement et un deuxième état d'agencement à atteindre de l'objet (600) dans une étape de détermination (109), le type de l'objet (600) comprenant une taille, une configuration, une masse, une forme, une propriété de matériau en vrac, une propriété de liquide, un degré de mélange et un degré de dissolution, le premier état d'agencement et le deuxième état d'agencement comprenant, selon le type de l'objet (600), un positionnement et/ou une orientation par rapport au rotor (400), un degré de compactage, un degré de mélange, un degré de séparation, un degré de dissolution de l'objet (600) ; et
sélectionner un modèle de mouvement dans une liste de modèles de mouvement possibles, le modèle de mouvement définissant une direction d'accélération en translation et/ou un axe de rotation et/ou un nombre d'impulsions d'accélération successives et/ou une fréquence et/ou une intensité d'accélération des impulsions d'accélération et/ou une durée d'accélération des impulsions d'accélération et/ou une durée d'exécution du modèle de mouvement, qui est ou sont approprié (s) pour transférer l'objet (600) du premier état d'agencement au deuxième état d'agencement, dans une étape de sélection de modèle de mouvement (111).

9. Procédé (100) selon l'une des revendications précédentes, l'étape d'agencement (103) comprenant les étapes suivantes :
surveiller l'objet (600) et détecter un état d'agencement de l'objet (600) dans une première étape de détection (113) ;
adapter l'exécution du mouvement d'accélération dans l'étape d'agencement (105) sur la base de l'état d'agencement détecté dans une étape d'adaptation (115), l'adaptation de l'exécution du mouvement d'accélération comprenant l'adaptation du modèle de mouvement ou
l'exécution d'un autre modèle de mouvement ; et/ou surveiller l'objet (600) pendant l'étape d'agencement (105), détecter l'objet (600) dans le deuxième état d'agencement et terminer le mouvement d'accélération dans d'une deuxième étape de détection (117).

10. Procédé (100) selon la revendication 9, la première étape de détection (113) et/ou la deuxième étape de détection (117) comprenant les étapes suivantes :
déterminer une intensité magnétique qui est nécessaire pour maintenir le rotor (400) dans une position flottante au-dessus de la surface statorique (303) du module statorique (300) au moyen du couplage magnétique entre le champ magnétique de rotor et le champ magnétique de stator, et/ou qui est nécessaire pour accélérer et/ou freiner le rotor (400) dans le mouvement d'accélération au moyen du couplage magnétique entre le champ magnétique de rotor et le champ magnétique de stator, et/ou qui est nécessaire pour déplacer le rotor (400) au moyen du couplage magnétique entre le champ magnétique de rotor et le champ magnétique de stator, dans une étape de détermination d'intensité (119) ; et
déterminer le premier état d'agencement et/ou le deuxième état d'agencement de l'objet (600), avec prise en compte de l'intensité magnétique nécessaire.

11. Procédé (100) selon la revendication 9 ou 10, la première étape de détection (113) et/ou la deuxième étape de détection (117) comprenant les étapes suivantes :
surveiller l'objet (600) sur le rotor par le biais d'un dispositif de surveillance (700) dans une étape de surveillance (121), le dispositif de surveillance (700) étant conçu comme un dispositif de surveillance optique ou comme un dispositif de surveillance acoustique ou comme un dispositif de surveillance électromagnétique et étant adapté pour déterminer un état d'agencement de l'objet (600) par réception de signaux de mesure optiques ou acoustiques ou électromagnétiques appropriés.

12. Procédé (100) selon l'une des revendications précédentes 8 à 11, la détermination du type de l'objet (600) dans l'étape de détermination (109) et/ou la sélection du modèle de mouvement dans l'étape de sélection de modèle de mouvement (111) et/ou la détection de l'état d'agencement dans la première étape de détection (113) et/ou l'adaptation du modèle de mouvement dans l'étape d'adaptation (115) et/ou la détection de l'objet (600) dans le deuxième état d'agencement dans la deuxième étape de détection (117) étant effectuées par un réseau neuronal entraîné de manière appropriée ou par une pluralité de réseaux neuronaux entraînés de manière appropriée.

13. Procédé (100) selon l'une des revendications précédentes, l'objet (600) comprenant un composant (601) ou une pluralité de composants (601), un état d'agencement de l'objet (600) par rapport au rotor (400) comprenant une position de chacun des composants (601) sur le rotor (400) et/ou une orientation de chacun des composants (601) par rapport au rotor (400), deux positions d'un composant (601) sur le rotor (400) pouvant être converties l'une en l'autre par un mouvement de translation du composant (601) sur le rotor (400), deux orientations d'un composant (601) par rapport au rotor (400) pouvant être converties l'une dans l'autre par rotation du composant (601) sur un axe de rotation, et un mouvement accéléré saccadé du rotor (400), provoqué par l'impulsion d'accélération (AP), entraînant l'objet (600) à transporter suivant un mouvement de translation et/ou un mouvement d'inclinaison et/ou un mouvement de rotation par rapport au rotor (400) du fait d'une inertie de l'objet (600) .

14. Procédé (100) selon l'une des revendications précédentes, l'objet (600) comprenant un matériau en vrac (605) remplissant un récipient (603), et un état d'agencement de l'objet (600) comprenant le remplissage du récipient (603) avec le matériau en vrac (605) avec une densité de remplissage spécifique, ou l'objet (600) comprenant un matériau en vrac (605) et/ou un fluide (607) qui remplit un récipient (603) et qui comporte au moins deux composants, et/ou un état d'agencement de l'objet (600) comprenant le remplissage du récipient (603) avec le matériau en vrac (605) ou le fluide (607) avec un mélange déterminé ou une séparation déterminée des au moins deux composants.

15. Système d'entraînement planaire (200) comprenant au moins une unité de commande (201), un module statorique (300) pourvu d'une surface statorique (303) et un rotor (400) pouvant être positionné sur la surface statorique (303), un couplage magnétique pouvant être réalisé entre un champ magnétique de rotor et des champs magnétiques de stator qui peuvent être générés par le module statorique (300), un mouvement du rotor par rapport au module statorique étant rendu possible par une commande ciblée des champs magnétiques de stator, un objet (600) pouvant être positionné sur le rotor (400) dans un premier état d'agencement, et le système d'entraînement planaire (200) étant conçu pour mettre en œuvre le procédé (100) selon l'une des revendications précédentes 1 à 14.
